# EUROPEAN PATENT APPLICATION

(11) **EP 4 492 913 A1**
(43) Date of publication of application: **15.01.2025**
(21) Application number: 22930355.7
(22) Date of filing: 11.03.2022
(51) Int. Cl.: H04W 92/10

(54) **MODEL TRAINING DEPLOYMENT METHOD/APPARATUS/DEVICE AND STORAGE MEDIUM**

(71) Applicant: Beijing Xiaomi Mobile Software Co., Ltd., Beijing 100085 (CN)
(72) Inventor: CHI, Liangang, Beijing 100085 (CN)
(74) Representative: Gunzelmann, Rainer
(86) International application number: PCT/CN2022/080477
(87) International publication number: WO 2023/168717

(57) **Abstract**

The present disclosure provides a method/apparatus/device/storage medium, which belong to the technical field of communications. A UE first reports capability information to a network device, wherein the capability information can be used for indicating support capabilities of AI and/or ML of the UE. Then, the UE acquires model information of an encoder model to be trained and/or model information of a decoder model to be trained which are sent by the network device, and generates the encoder model and the decoder model on the basis of the model information of the encoder model and/or the model information of the decoder model. Finally, the UE sends the model information of the decoder model to the network device, the model information of the decoder model being used for deploying the decoder model. Thus, the embodiments of the present disclosure provide a method for generating and deploying models, and the method can be used for training and deploying AI/ML models.

## Description

### TECHNICAL FIELD

The disclosure relates to the technical field of communications, in particular to a model training and deployment method/apparatus/device and a storage medium.

### BACKGROUND

With the continuous development of Artificial Intelligence (AI) technologies and Machine Learning (ML) technologies, the application fields (e.g., image recognition, speech processing, natural language processing, games, or the like) of AI technologies and ML technologies are becoming more and more extensive. It usually needs to use an AI/MI, model to perform the encoding and decoding in the course of using AI technologies and ML technologies. Therefore, there is an urgent need for a model training and deployment method for AI/ML.

### SUMMARY

The disclosure provides a model training and deploying method/apparatus/device and a storage medium, which are used for training and deploying an Artificial Intelligence (AI)/ Machine Learning (ML) model.

An embodiment in an aspect of the disclosure provides a model training and deploying method, performed by a user equipment (UE), includes:
reporting capability information to a network device, the capability information being used for indicating support capabilities of UE for AI and/or ML;
acquiring model information of an encoder model to be trained and model information of a decoder model to be trained that are sent by the network device;
generating the encoder model and the decoder model based on the model information of the encoder model to be trained and/or the model information of the decoder model to be trained; and
sending the model information of the decoder model to the network device, the model information of the decoder model being used for deploying the decoder model.

An embodiment in another aspect of the disclosure provides a model training and deploying method, performed by a network device, includes:
acquiring capability information reported by User Equipment (UE), the capability information being used for indicating support capabilities of UE for AI and/or ML;
sending model information of an encoder model to be trained and/or model information of a decoder model to be trained to the UE based on the capability information;
acquiring model information of the decoder model sent by the UE, the model information of the decoder model being used for deploying the decoder model; and
deploying the decoder model based on the model information of the decoder model.

An embodiment in yet another aspect of the disclosure provides a model training and deploying apparatus, including:
a reporting module, configured to report capability information to a network device, the capability information being used for indicating support capabilities of UE for AI and/or ML;
an acquiring module, configured to acquire model information of an encoder model to be trained and model information of a decoder model to be trained that are sent by the network device;
a generating module, configured to generate the encoder model and the decoder model based on the model information of the encoder model to be trained and/or the model information of the decoder model to be trained; and
a sending module, configured to send the model information of the decoder model to the network device, the model information of the decoder model being used for deploying the decoder model.

An embodiment in yet another aspect of the disclosure provides a model training and deploying apparatus, including:
a first acquiring module, configured to acquire capability information reported by UE, the capability information being used for indicating support capabilities of the UE for AI and/or ML;
a sending module, configured to send model information of an encoder model to be trained and/or model information of a decoder model to be trained to the UE based on the capability information;
a second acquiring module, configured to acquire model information of the decoder model sent by the UE, the model information of the decoder model being used for deploying the decoder model; and
a generating module, configured to generate the decoder model based on the model information of the decoder model.

An embodiment in yet another aspect of the disclosure provides a communication apparatus. The communication apparatus includes a processor and a memory, in which the memory has a computer program stored therein, and the processor is configured to execute the computer program stored in the memory, to cause the apparatus to perform the method according to embodiments in the above aspect.

An embodiment in yet another aspect of the disclosure provides a communication apparatus. The communication apparatus includes a processor and a memory, in which the memory has a computer program stored therein, and the processor is configured to execute the computer program stored in the memory, to cause the apparatus to perform the method according to embodiments in the above another aspect.

An embodiment in yet another aspect of the disclosure provides a communication apparatus, including a processor and an interface circuit.

The interface circuit is configured to receive code instructions and transmit the code instructions to the processor; and
the processor is configured to run the code instructions to perform the method according to embodiments in one aspect.

An embodiment in yet another aspect of the disclosure provides a communication apparatus, including a processor and an interface circuit.

The interface circuit is configured to receive code instructions and transmit the code instructions to the processor; and
the processor is configured to run the code instructions to perform the method according to embodiments in another aspect.

An embodiment in yet another aspect of the disclosure provides a computer-readable storage medium having an instruction stored therein, when the instructions are executed, the method according to embodiments in one aspect is performed.

An embodiment in yet another aspect of the disclosure provides a computer-readable storage medium having an instruction stored therein, when the instructions is executed, the method according to embodiments in another aspect is performed.

In conclusion, in the method/apparatus/UE/base station and storage medium according to embodiments of the disclosure, the UE may first report capability information to the network device, in which the capability information may be used for indicating support capabilities of the UE for AI and/or ML; and then, the UE may acquire the model information of the encoder model to be trained and/or the model information of the decoder model to be trained which are sent by the network device, generate the encoder model and the decoder model based on the model information of the encoder model to be trained and/or the model information of the decoder model to be trained; and finally, the UE may send the model information of the decoder model to the network device, the model information of the decoder model being used for deploying the decoder model, such that the network device may deploy the decoder model based on the model information of the decoder model. Therefore, embodiments of the disclosure provide a method for generating and deploying a model, which may be used to train and deploy an AI/ML model.

### BRIEF DESCRIPTION OF THE DRAWINGS

The foregoing and/or additional aspects and advantages of the disclosure will become apparent and easily understood from the description of embodiments below in conjunction with the accompanying drawings.
FIG. 1 is a schematic flowchart illustrating a model training and deploying method according to an embodiment of the disclosure.
FIG. 2a is a schematic flowchart illustrating a model training and deploying method according to another embodiment of the disclosure.
FIG. 2b is a schematic flowchart illustrating a model training and deploying method according to yet another embodiment of the disclosure.
FIG. 2c is a schematic flowchart illustrating a model training and deploying method according to still another embodiment of the disclosure.
FIG. 2d is a schematic flowchart illustrating a model training and deploying method according to still another embodiment of the disclosure.
FIG. 2e is a schematic flowchart illustrating a model training and deploying method according to still another embodiment of the disclosure.
FIG. 3a is a schematic flowchart illustrating a model training and deploying method according to still another embodiment of the disclosure.
FIG. 3b is a schematic flowchart illustrating a model training and deploying method according to still another embodiment of the disclosure.
FIG. 3c is a schematic flowchart illustrating a model training and deploying method according to still another embodiment of the disclosure.
FIG. 3d is a schematic flowchart illustrating a model training and deploying method according to still another embodiment of the disclosure.
FIG. 3e is a schematic flowchart illustrating a model training and deploying method according to still another embodiment of the disclosure.
FIG. 4 is a schematic flowchart illustrating a model training and deploying method according to still another embodiment of the disclosure.
FIG. 5a is a schematic flowchart illustrating a model training and deploying method according to still another embodiment of the disclosure.
FIG. 5b is a schematic flowchart illustrating a model training and deploying method according to still another embodiment of the disclosure.
FIG. 5c is a schematic flowchart illustrating a model training and deploying method according to still another embodiment of the disclosure.
FIG. 6a is a schematic flowchart illustrating a model training and deploying method according to still another embodiment of the disclosure.
FIG. 6b is a schematic flowchart illustrating a model training and deploying method according to still another embodiment of the disclosure.
FIG. 6c is a schematic flowchart illustrating a model training and deploying method according to still another embodiment of the disclosure.
FIG. 6d is a schematic flowchart illustrating a model training and deploying method according to still another embodiment of the disclosure.
FIG. 6e is a schematic flowchart illustrating a model training and deploying method according to still another embodiment of the disclosure.
FIG. 7 is a schematic structural diagram illustrating a model training and deploying apparatus according to an embodiment of the disclosure.
FIG. 8 is a schematic structural diagram illustrating a model training and deploying apparatus according to another embodiment of the disclosure.
FIG. 9 is a block diagram illustrating UE according to an embodiment of the disclosure.
FIG. 10 is a block diagram illustrating a network-side device according to an embodiment of the disclosure.

### DETAILED DESCRIPTION

Embodiments will be described in detail herein, and examples thereof are shown in the accompanying drawings. When the following description involves the accompanying drawings, unless otherwise indicated, the same numbers in different accompanying drawings indicate the same or similar elements. The implementations described in the following embodiments are not all the implementations consistent with embodiments of the disclosure. On the contrary, these embodiments are examples of apparatuses and methods consistent with some aspects of the disclosure, as detailed in the appended claims.

The terms used in embodiments of the disclosure are for the purpose of describing particular embodiments only and are not intended to limit embodiments of the disclosure. The singular forms "a/an" and "the" used in embodiments and the appended claims of the disclosure are intended to include the plural forms as well, unless the context clearly indicated otherwise. It is understandable that the term "and/or" as used herein includes any and all combinations of one or more related listed items.

It is understandable that, although the terms "first", "second", "third", etc. may be used to describe various information in embodiments of the disclosure, these should not be limited to these terms. These terms are only used to distinguish information of the same type from each other. For example, "first information" may also be referred to as "second information" without departing from the scope of embodiments of the disclosure. Similarly, "second information" may also be referred to as "first information". Depending on the context, the words "in case of" and "if" as used here may be interpreted as "in the event of..." or "when..." or "in response to determining".

A model training deployment method/apparatus/device and a storage medium provided by the embodiments of the disclosure will be described in detail below by reference to the accompanying drawings.

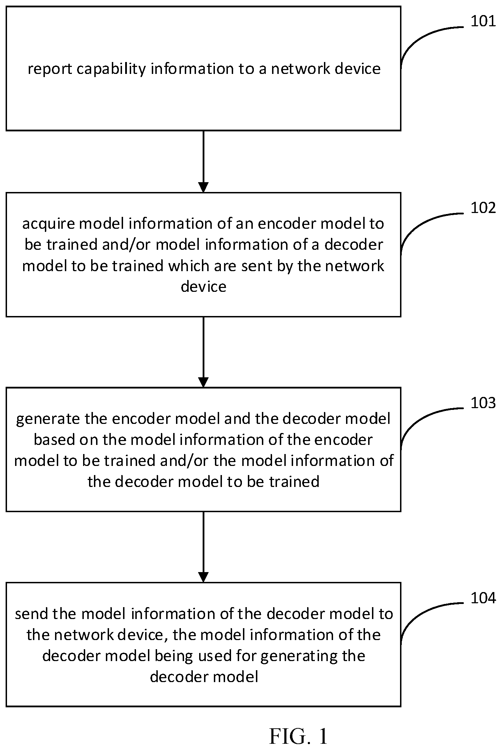

FIG. 1 is a schematic flowchart illustrating a model training and deploying method according to an embodiment of the disclosure. The method is performed by a User Equipment (UE). As illustrated in FIG. 1, the method may include the following.

At block 101: capability information is reported to a network device.

It is noteworthy that, in one embodiment of the disclosure, the UE may refer to a device that provides voice and/or data connectivity to a user. The terminal device may communicate with one or more core networks via a radio access network (RAN). The UE may be an Internet of Thing (IoT) terminal, such as a sensor device or a mobile phone (or a "cellular" phone) and a computer with an IoT terminal, such as a fixed device, a portable device, a pocket-sized device, a handheld device, or a device mounted in a computer or vehicle. For example, the UE may be a station (STA), a subscriber unit, a subscriber station, a mobile station, a mobile, a remote station, an access point, a remote terminal, an access terminal, a user terminal or a user agent. Or, the UE may be a device for an unmanned aerial vehicle. Or, the UE may be a vehicle-mounted device, such as a trip computer with a wireless communication function or a wireless terminal connected to an external trip computer. Or, the UE may be a roadside device, such as a street lamp, a signal lamp or other roadside devices with a wireless communication function.

In one embodiment of the disclosure, this capability information may be used for indicating support capabilities of the UE for Artificial Intelligent (AI) and/or Machine Learning (ML).

Also, in one embodiment of the disclosure, the model may include at least one of:
an AI model; or
an ML model.

Further, in one embodiment of the disclosure, the capability information may include at least one of:
whether the UE supports AI;
whether the UE supports ML;
a type of AI and/or ML supported by the UE; or
maximum support capability information of the UE for the model, the maximum support capability information including structural information of a most complex model supported by the UE.

In one embodiment of the disclosure, the structural information may include, for example, a number of layers of the model or the like.

At block 102, model information of an encoder model to be trained and/or model information of a decoder model to be trained, sent by the network device, are obtained.

In one embodiment of the disclosure, different encoder models to be trained and/or different decoder models to be trained may be stored in the network device, and there is a correspondence between the encoder models and the decoder models.

Also, in one embodiment of the disclosure, after the UE sends the capability information to the network device, the network device may, based on the capability information, select an encoder model to be trained that matches the support capability of the UE for AI and/or ML from the different encoder models stored in the network device; and/or select a decoder model to be trained that matches its own support capability of the network device for AI and/or ML from the different decoder models stored in the network device; and then send the model information of the selected encoder model to be trained and/or the model information of the selected decoder model to be trained to the UE. The relevant content about the model information will be introduced in detail later.

At block 103, the encoder model and the decoder model are generated based on the model information of the encoder model to be trained and/or the model information of the decoder model to be trained.

In one embodiment of the disclosure, the UE generates the encoder model and the decoder model by training the encoder model to be trained and/or the decoder model to be trained.

Further, detailed specific methods for generating the encoder model and the decoder model described above may be described in subsequent embodiments.

At block 104, the model information of the decoder model is sent to the network device, the model information of the decoder model being used for deploying the decoder model.

In one embodiment of the disclosure, the model information of the decoder model may include at least one of:
a mode type; or
model parameters of the model.

In one embodiment of the disclosure, the mode types may include:
a Convolutional Neural Network (CNN) model;
a fully-connected Deep Neural Network (DNN) model; or
a combination of the CNN and the fully-connected DNN.

Further, it is noteworthy that, in one embodiment of the disclosure, when the model type is different, the model parameters of the model are also different.

In detail, in one embodiment of the disclosure, when the type of the decoder model is the CNN model, the model parameters of the decoder model may include at least one of: a compression ratio of the CNN model, a number of convolutional layers of the CNN model, arrangement information of the convolutional layers, weight information of each convolutional layer, a respective convolution kernel size of each convolutional layer, a respective normalization layer adopted by each convolutional layer, or an activation function type.

In another embodiment of the disclosure, when the type of the decoder model is the fully-connected DNN model, the model parameters of the decoder model may include at least one of: a compression ratio of the fully-connected DNN model, a number of fully-connected layers, arrangement information of the fully-connected layers, respective weight information of each fully-connected layer, a respective number of nodes of each fully-connected layer, a respective normalization layer adopted by each fully-connected layer, or an activation function type.

In another embodiment of the disclosure, when the type of the decoder model is the combination of the CNN and the fully-connected DNN, the model parameters of the decoder model may include at least one of: a compression ratio of the combination of the CNN and the fully-connected DNN, a number of convolutional layers and fully-connected layers, a collocation mode, weight information of the convolutional layers, convolutional kernel sizes, the respective number of nodes of fully-connected layers, respective weight information of the fully-connected layers, respective normalization layer adopted by each fully-connected layer and each convolutional layer, or an activation function type.

In conclusion, in the method according to embodiments of the disclosure, the UE may first report capability information to the network device, in which the capability information may be used for indicating the support capability of the UE for the AI and/or the MI,; and then, the UE may acquire the model information of the encoder model to be trained and/or the model information of the decoder model to be trained which are sent by the network device, generate the encoder model and the decoder model on the basis of the model information of the encoder model to be trained and/or the model information of the decoder model to be trained; and finally, the UE may send the model information of the decoder model to the network device, the model information of the decoder model being used for deploying the decoder model, such that the network device may deploy the decoder model based on the model information of the decoder model. Therefore, embodiments of the disclosure provide a method for generating and deploying a model, which may be used to train and deploy an AI/MI, model.

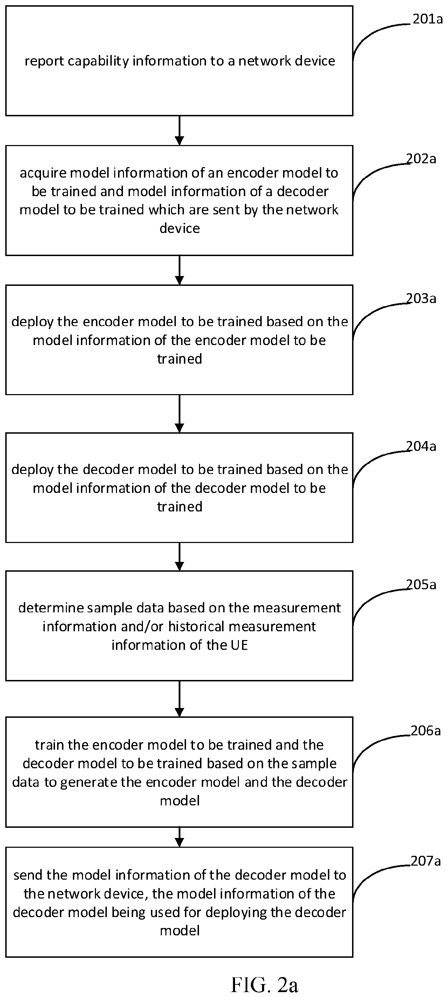

FIG. 2a is a schematic flowchart illustrating a model training and deploying method according to an embodiment of the disclosure. The method is performed by UE. As illustrated in FIG. 2a, the method may include the following.

At block 201a: capability information is reported to a network device.

The detailed introduction of the block 201a may refer to the description of the above embodiments, which will not be repeated here in embodiments of the disclosure.

At block 202a: model information of an encoder model to be trained and model information of a decoder model to be trained, sent by the network device, are obtained.

In detail, in one embodiment of the disclosure, after the UE reports the capability information to the network device, the network device may select, based on the capability information, the encoder model to be trained supported by the UE and the decoder model to be trained supported by the network device from the different encoder models to be trained and the different decoder models to be trained that are stored in the network device; and then send the model information of the selected encoder model to be trained and/or the model information of the selected decoder model to be trained to the UE. The encoder model to be trained and the decoder model to be trained, which are selected by the network device, are matched with each other.

At block 203a, the encoder model to be trained is deployed based on the model information of the encoder model to be trained.

At block 204a, the decoder model to be trained is deployed based on the model information of the decoder model to be trained.

At block 205a, sample data is determined based on the measurement information and/or historical measurement information of the UE.

In one embodiment of the disclosure, the measurement information may include at least one of:
measurement information of the UE for a reference signal (e.g., Synchronization Signal Block (SSB) or Channel State Information-Reference Signal (CSI-RS);
Radio resource management (RRM) measurement information of the UE;
Radio Resource Control (RRC) measurement information of the UE; or
beam measurement information of the UE.

At block 206a, the encoder model to be trained and the decoder model to be trained are trained based o the sample data to generate the encoder model and the decoder model.

At block 207a, the model information of the decoder model are sent to the network device, the model information of the decoder model being used for deploying the decoder model.

The detailed introduction of the block 207a may refer to the description of the above embodiments, which will not be repeated here in embodiments of the disclosure.

In conclusion, in the method according to embodiments of the disclosure, the UE may first report the capability information to the network device, in which the capability information may be used for indicating the support capability of the UE for the AI and/or the ML; and then, the UE may acquire the model information of the encoder model to be trained and/or the model information of the decoder model to be trained that are sent by the network device, generate the encoder model and the decoder model based on the model information of the encoder model to be trained and/or the model information of the decoder model to be trained; and finally, the UE may send the model information of the decoder model to the network device, the model information of the decoder model being used for deploying the decoder model, such that the network device may deploy the decoder model based on the model information of the decoder model. Therefore, embodiments of the disclosure provide a method for generating and deploying a model, which may be used to train and deploy an AI/MI, model.

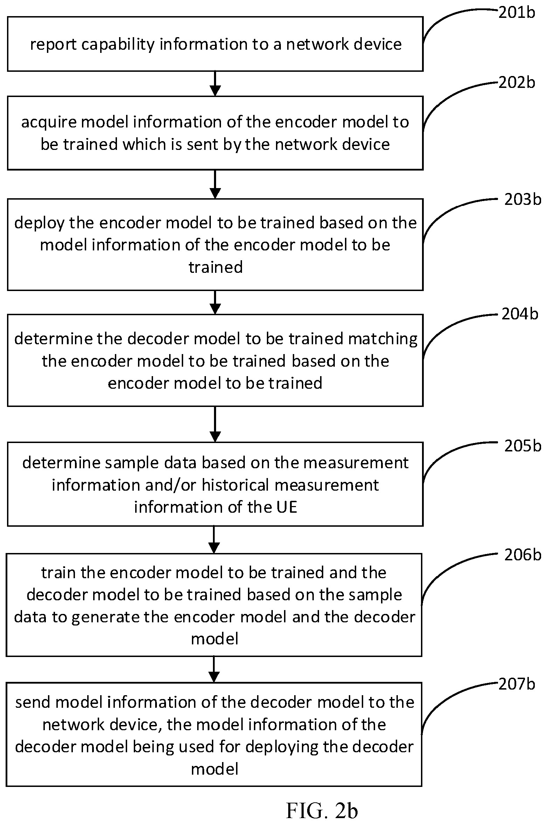

FIG. 2b is a schematic flowchart illustrating a model training and deploying method according to an embodiment of the disclosure. The method is performed by a UE. As illustrated in FIG. 2b, the method may include the following.

At block 201b, capability information is sent to a network device.

The detailed introduction of the block 201b may refer to the description of above embodiments, which will not be repeated here in embodiments of the disclosure.

At block 202b, model information of the encoder model to be trained, sent by the network device, is acquired.

In detail, in one embodiment of the disclosure, after the UE reports the capability information to the network device, the network device may select, based on the capability information, an encoder model to be trained supported by the UE from different encoder models to be trained that are stored in the network device; and then send the model information of the selected encoder model to be trained to the UE.

In addition, it is noteworthy that, in one embodiment of the disclosure, the encoder model to be trained should satisfy the following conditions:
the selected encoder model to be trained should be a model that matches the capability information of the UE (i.e., a model supported by the UE); or
the decoder model to be trained corresponding to the selected encoder model to be trained should be a model supported by the network device.

At block 203b, the encoder model to be trained is deployed based on the model information of the encoder model to be trained.

At block 204b, the decoder model to be trained matching the encoder model to be trained is determined based on the encoder model to be trained.

In detail, in one embodiment of the disclosure, the model information of the decoder model to be trained that matches the encoder model to be trained may be determined based on the model information of the encoder model to be trained; and then the decoder model to be trained may be deployed based on the model information of the decoder model to be trained.

At block 205b, sample data is determined based on the measurement information and/or historical measurement information of the UE.

At block 206b, the encoder model to be trained and the decoder model to be trained are trained based on the sample data to generate the encoder model and the decoder model.

At block 207b, the model information of the decoder model is sent to the network device, the model information of the decoder model being used for deploying the decoder model.

The detailed introduction of the blocks 205b-207b may refer to the description of above embodiments, which will not be repeated here in embodiments of the disclosure.

In conclusion, in the method according to embodiments of the disclosure, the UE may first report the capability information to the network device, in which the capability information may be used for indicating the support capability of the UE for the AI and/or the ML; and then, the UE may acquire the model information of the encoder model to be trained and/or the model information of the decoder model to be trained which are sent by the network device, generate the encoder model and the decoder model based on the model information of the encoder model to be trained and/or the model information of the decoder model to be trained; and finally, the UE may send the model information of the decoder model to the network device, the model information of the decoder model being used for deploying the decoder model, such that the network device may deploy the decoder model based on the model information of the decoder model. Therefore, embodiments of the disclosure provide a method for generating and deploying a model, which may be used to train and deploy an AI/MI, model.

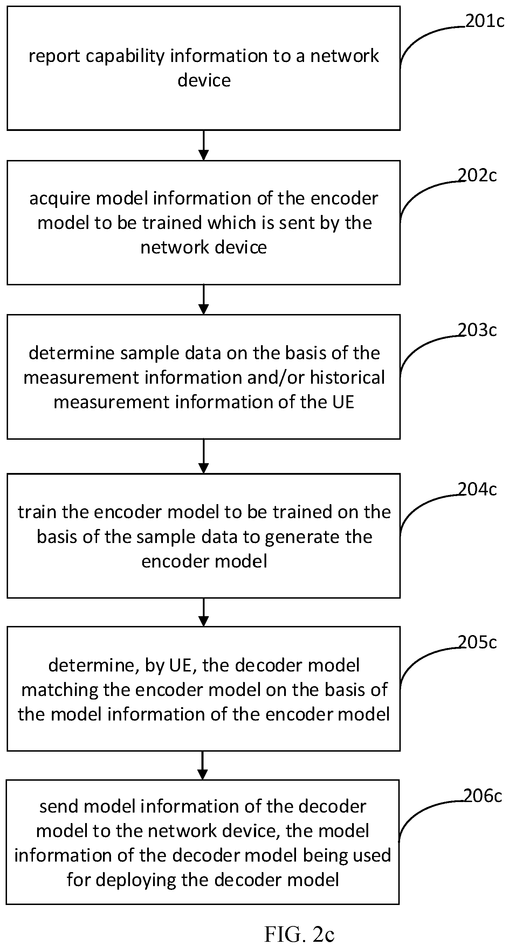

FIG. 2c is a schematic flowchart illustrating a model training and deploying method according to an embodiment of the disclosure. The method is performed by the UE. As illustrated in FIG. 2c, the method may include the following.

At block 201c, capability information is reported to a network device.

The detailed introduction of the block 201c may refer to the description of above embodiments, which will not be repeated here in embodiments of the disclosure.

At block 202c, model information of the encoder model to be trained, sent by the network device, is acquired.

At block 203c, sample data is determined based on the measurement information and/or historical measurement information of the UE.

At block 204c, the encoder model to be trained is trained based on the sample data to generate the encoder model.

The detailed introduction of the blocks 201c-204c may refer to the description of above embodiments, which will not be repeated here in embodiments of the disclosure.

At block 205c, the decoder model matching the encoder model is determined by the UE based on the model information of the encoder model.

In detail, in one embodiment of the disclosure, the model information of the decoder model that matches the encoder model may be determined on the basis of the model information of the encoder model; and then the decoder model may be deployed on the basis of the model information of the decoder model.

At block 206c, the model information of the decoder model is sent to the network device, the model information of the decoder model being used for deploying the decoder model.

The detailed introduction of the blocks 205c-206c may refer to the description of above embodiments, which will not be repeated here in embodiments of the disclosure.

In conclusion, in the method according to embodiments of the disclosure, the UE may first report the capability information to the network device, in which the capability information may be used for indicating the support capability of the UE for the AI and/orthe MI,; and then, the UE may acquire the model information of the encoder model to be trained and/or the model information of the decoder model to be trained which are sent by the network device, generate the encoder model and the decoder model on the basis of the model information of the encoder model to be trained and/or the model information of the decoder model to be trained, and finally, send the model information of the decoder model to the network device, the model information of the decoder model being used for deploying the decoder model, such that the network device may deploy the decoder model based on the model information of the decoder model. Therefore, embodiments of the disclosure provides a method for generating and deploying a model, which may be used to train and deploy an AI/ML model.

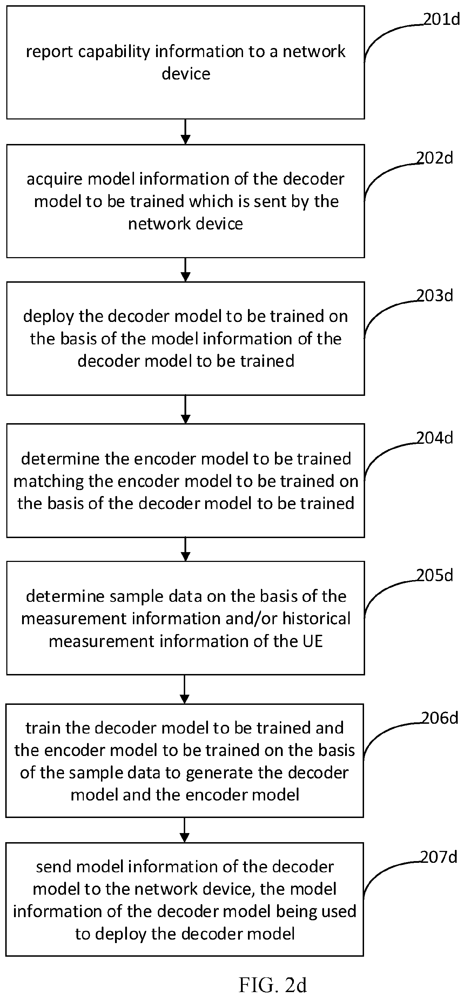

FIG. 2d is a schematic flowchart illustrating a model training and deploying method according to an embodiment of the disclosure. The method is performed by the UE. As illustrated in FIG. 2d, the method may include the following.

At block 201d, capability information is sent to a network device.

The detailed introduction of the block 201d may refer to the description of above embodiments, which will not be repeated here in embodiments of the disclosure.

At block 202d, model information of the decoder model to be trained, sent by the network device, is acquired.

In detail, in one embodiment of the disclosure, after the UE reports the capability information to the network device, the network device may select, based on the capability information, a decoder model to be trained from different decoder models to be trained which are stored in the network device.

It is noteworthy that, in one embodiment of the disclosure, the above "selecting, based on the capability information, the decoder model to be trained" means that in selecting the decoder model to be trained based on the capability information, the selected decoder model to be trained must meet the following conditions:
the selected decoder model to be trained should be a model supported by the network device; or
the encoder model to be trained corresponding to the selected decoder model to be trained should be a model that matches the capability information of UE (i.e., a model supported by the UE).

At block 203d, the decoder model to be trained is deployed based on the model information of the decoder model to be trained.

At block 204d, the encoder model to be trained matching the decoder model to be trained is determined based on the decoder model to be trained.

In detail, in one embodiment of the disclosure, the model information of the encoder model to be trained that matches the decoder model to be trained may be determined based on the model information of the decoder model to be trained; and then the encoder model to be trained may be deployed based on the model information of the encoder model to be trained.

Also, in one embodiment of the disclosure, the determined encoder model to be trained is a model supported by the UE.

At block 205d, sample data is determined based on the measurement information and/or historical measurement information of the UE.

At block 206d, the decoder model to be trained and the encoder model to be trained are trained based on the sample data to generate the decoder model and the encoder model.

At block 207d, the model information of the decoder model is sent to the network device, the model information of the decoder model being used for deploying the decoder model.

The detailed introduction of the blocks 205d-207d may refer to the description of above embodiments, which will not be repeated here in embodiments of the disclosure.

In conclusion, in the method according to embodiments of the disclosure, the UE may first report the capability information to the network device, in which the capability information may be used for indicating the support capabilities of the UE for the AI and/or the MI,; and then, the UE may acquire the model information of the encoder model to be trained and/or the model information of the decoder model to be trained which are sent by the network device, generate the encoder model and the decoder model on the basis of the model information of the encoder model to be trained and/or the model information of the decoder model to be trained, and finally, the UE may send the model information of the decoder model to the network device, the model information of the decoder model being used for deploying the decoder model, such that the network device may deploy the decoder model based on the model information of the decoder model. Therefore, embodiments of the disclosure provide a method for generating and deploying a model, which may be used to train and deploy an AI/MI, model.

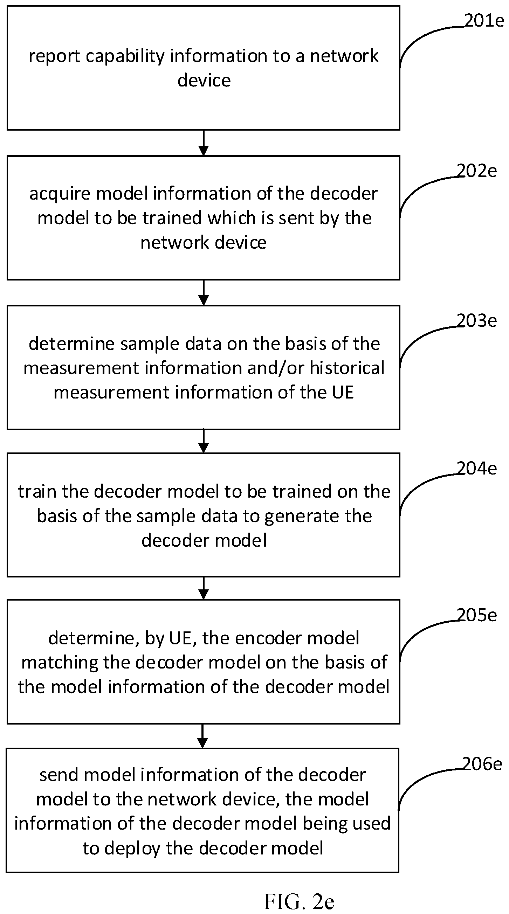

FIG. 2e is a schematic flowchart illustrating a model training and deploying method according to an embodiment of the disclosure. The method is performed by the UE. As illustrated in FIG. 2e, the method may include the following.

At block 201e, capability information is reported to a network device.

At block 202e, model information of the decoder model to be trained, sent by the network device, is acquired.

At block 203e, sample data is determined based on the measurement information and/or historical measurement information of the UE.

At block 204e, the decoder model to be trained is trained based on the sample data to generate the decoder model.

At block 205e, the encoder model matching the decoder model is determined by the UE based on the model information of the decoder model.

In detail, in one embodiment of the disclosure, the model information of the encoder model that matches the decoder model may be determined based on the model information of the decoder model; and then the encoder model may be generated based on the model information of the encoder model.

At block 206e, the model information of the decoder model is sent to the network device, the model information of the decoder model being used for deploying the decoder model.

The detailed introduction of the blocks 201e-206e may refer to the description of above embodiments, which will not be repeated here in embodiments of the disclosure.

In conclusion, in the method according to embodiments of the disclosure, the UE may first report the capability information to the network device, in which the capability information may be used for indicating the support capabilities of the UE for the AI and/or the MI,; and then, the UE may acquire the model information of the encoder model to be trained and/or the model information of the decoder model to be trained which are sent by the network device, generate the encoder model and the decoder model based on the model information of the encoder model to be trained and/or the model information of the decoder model to be trained, and finally, the UE may send the model information of the decoder model to the network device, the model information of the decoder model being used for deploying the decoder model, such that the network device may deploy the decoder model based on the model information of the decoder model. Therefore, embodiments of the disclosure provide a method for generating and deploying a model, which may be used to train and deploy an AI/MI, model.

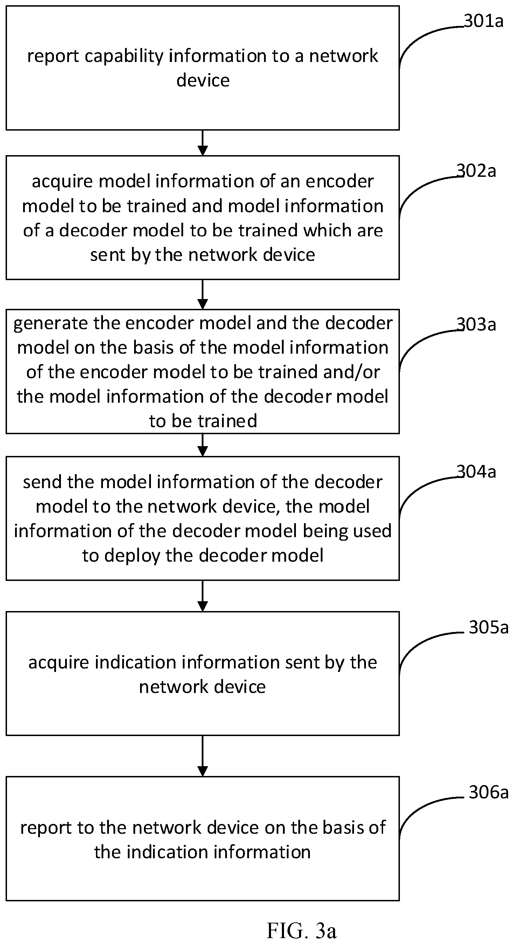

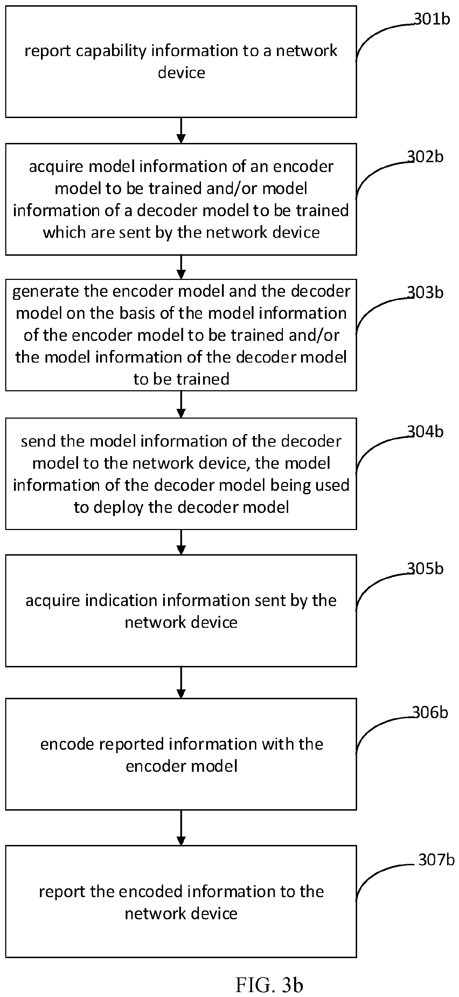

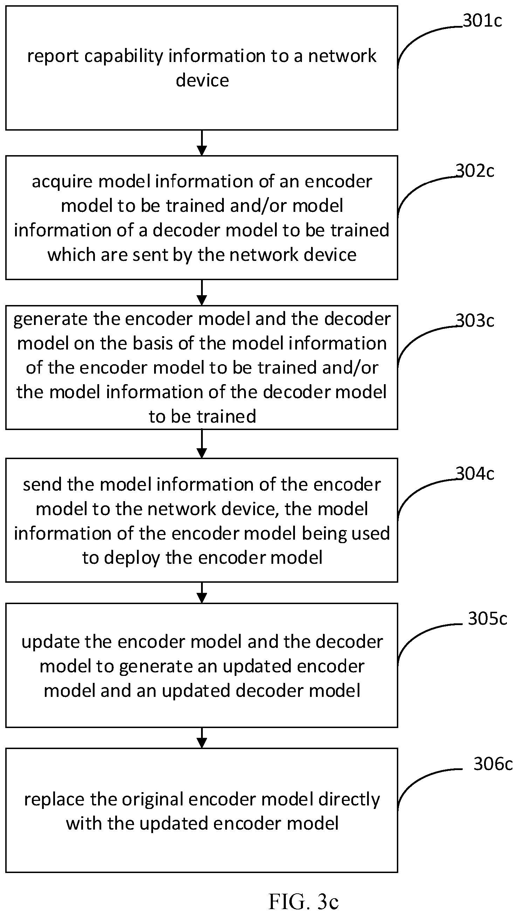

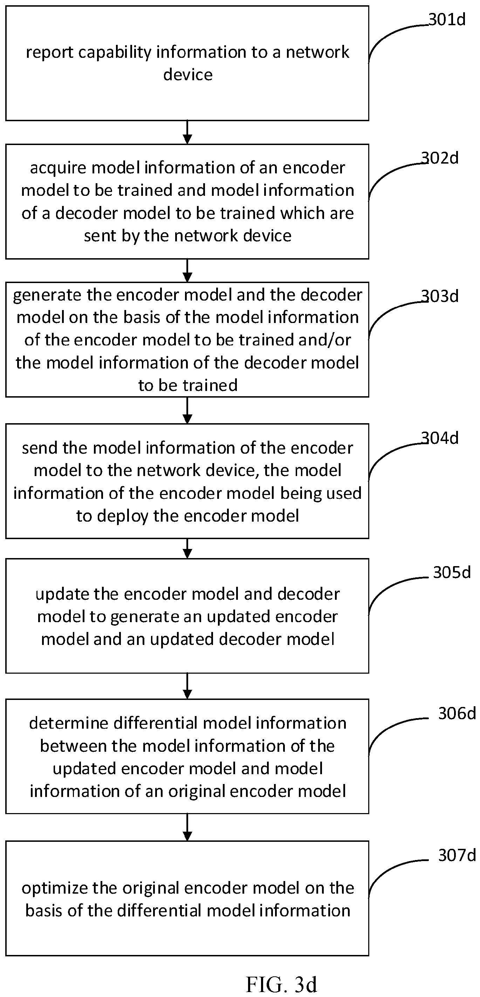

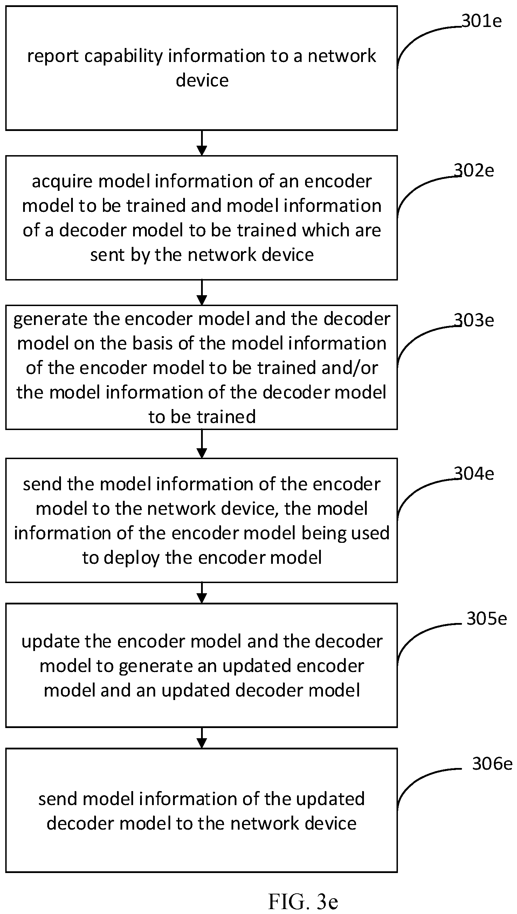

FIG. 3a is a schematic flowchart illustrating a model training and deploying method according to an embodiment of the disclosure. The method is performed by the UE. As illustrated in FIG. 3, the method may include the following.

At block 301a, capability information is reported to a network device.

At block 302a, model information of an encoder model to be trained and model information of a decoder model to be trained, sent by the network device, are acquired.

At block 303a, the encoder model and the decoder model is generated based on the model information of the encoder model to be trained and/or the model information of the decoder model to be trained.

At block 304a, the model information of the decoder model is sent to the network device, the model information of the decoder model being used for deploying the decoder model.

The detailed introduction of the blocks 301a-304a may refer to the description of above embodiments, which will not be repeated here in embodiments of the disclosure.

At block 305a, indication information sent by the network device is acquired.

In one embodiment of the disclosure, the indication information may be used for indicating an information type when the UE reports to the network device. Also, in one embodiment of the disclosure, the information type may include at least one of:
original reported information that is not encoded by the encoder model; or
information obtained by encoding, with the encoder model, the original reported information.

Further, in one embodiment of the disclosure, the reported information may be information to be reported by the UE to the network device. Also, the reported information may include CSI information.

In one embodiment of the disclosure, the CSI information may include at least one of:
channel information;
feature matrix information of a channel;
feature vector information of the channel;
Precoding Matrix Indicator (PMI);
Channel Quality Indicator (CQI);
Rank Indicator (RI);
Reference Signal Received Power (RSRP);
Reference Signal Received Quality (RSRQ);
Signal-to-Interference plus Noise Ratio (SINR); or
reference signal resource indicator.

In addition, in one embodiment of the disclosure, the UE may acquire the indication information sent by the network device through signaling.

At block 306a, reporting to the network device is performed based on the indication information.

In one embodiment of the disclosure, if the indication information in above step 305a is used for indicating that the information type when the UE reports to the network device is the original reported information which is not encoded by the encoder model, then the UE may send the original reported information directly to the network device without encoding when the UE needs to report to the network device in the block 306a. If the indication information in above step 305a is used for indicating that the information type when the UE reports to the network device is the information obtained by encoding the original reported information with the encoder model, the UE needs to encode the reported information with the encoder model first when the UE needs to report to the network device in the block 306a, and then report the encoded information to the network device.

In conclusion, in the method according to embodiments of the disclosure, the UE may first report the capability information to the network device, in which the capability information may be used for indicating the support capability of the UE for the AI and/or the ML; and then, the UE may acquire the model information of the encoder model to be trained and/or the model information of the decoder model to be trained which are sent by the network device, generate the encoder model and the decoder model based on the model information of the encoder model to be trained and/or the model information of the decoder model to be trained, and finally, the UE may send the model information of the decoder model to the network device, the model information of the decoder model being used for deploying the decoder model, such that the network device may deploy the decoder model based on the model information of the decoder model. Therefore, embodiments of the disclosure provide a method for generating and deploying a model, which may be used to train and deploy an AI/MI, model.

FIG. 3b is a schematic flowchart illustrating a model training and deploying method according to an embodiment of the disclosure. The method is performed by the UE. As illustrated in FIG. 3, the method may include the following.

At block 301b, the capability information is sent to a network device.

At block 302b, model information of an encoder model to be trained and model information of a decoder model to be trained, sent by the network device, are acquired.

At block 303b, the encoder model and the decoder model are generate based on the model information of the encoder model to be trained and/or the model information of the decoder model to be trained.

At block 304b, the model information of the decoder model is sent to the network device, the model information of the decoder model being used for deploying the decoder model.

At block 305b, indication information sent by the network device is acquired, the indication information being used for indicating that an information type when the UE reports to the network device includes the information obtained by encoding, with the encoder mode, the original reported information.

Other detailed introduction of the blocks 301b-305b may refer to the description of above embodiments, which will not be repeated here in embodiments of the disclosure.

At block 306b, reported information are encoded with the encoder model.

At block 307b, the encoded information is reported to the network device.

In one embodiment of the disclosure, since the information type indicated in above block 305b when the UE reports is the information encoded by the encoder model, the information reported by the UE and received by the network device in the block 305b is essentially the information encoded by the encoder model. Based on this, the network device needs to use a decoder model (e.g., the decoder model generated in the above block 303b) to decode the information reported by the UE to acquire the original reported information.

In conclusion, in the method according to embodiments of the disclosure, the UE may first report the capability information to the network device, in which the capability information may be used for indicating the support capability of the UE for the AI and/or the ML; and then, the UE may acquire the model information of the encoder model to be trained and/or the model information of the decoder model to be trained which are sent by the network device, generate the encoder model and the decoder model on the basis of the model information of the encoder model to be trained and/or the model information of the decoder model to be trained, and finally, the UE may send the model information of the decoder model to the network device, the model information of the decoder model being used for deploying the decoder model, such that the network device may deploy the decoder model based on the model information of the decoder model. Therefore, embodiments of the disclosure provide a method for generating and deploying a model, which may be used to train and deploy an AI/MI, model.

FIG. 3c is a schematic flowchart illustrating a model training and deploying method according to an embodiment of the disclosure. The method is performed by a network device. As illustrated in FIG. 3 c, the method may include the following.

At block 301c, capability information is sent to a network device.

At block 302c, model information of an encoder model to be trained and model information of a decoder model to be trained, sent by the network device, are acquired.

At block 303c, the encoder model and the decoder model are generated based on the model information of the encoder model to be trained and/or the model information of the decoder model to be trained.

At block 304c, the model information of the encoder model is sent to the network device, the model information of the encoder model being used for deploying the encoder model.

Other detailed introduction of blocks 301c-304c may refer to the description of above embodiments, which will not be repeated here in embodiments of the disclosure.

At block 305c, the encoder model and decoder model are updated to generate an updated encoder model and an updated decoder model.

In one embodiment of the disclosure, the UE may update the encoder model and the decoder model based on an indication from the network device. Updating, by the UE, the encoder model and the decoder model based on the indication from the network device may include the following steps 1-3.

At step 1, update indication information sent by the network device is acquired.

In one embodiment of the disclosure, the update indication information may be used for instructing the UE to adjust the model parameters. In another embodiment of the disclosure, the update indication information may include model information of a new encoder model and/or model information of a new decoder model. The type of the new encoder model and the type of the new decoder model are different from the type of an original encoder model and the type of an original decoder model.

It is noteworthy that, in one embodiment of the disclosure, the update indication information may include the model information of the new encoder model only. In another embodiment of the disclosure, the update indication information may include the model information of the new decoder model only. In yet another embodiment of the disclosure, the update indication information may include both the model information of the new decoder model and the model information of the new encoder model.

At step 2, the new encoder model and the new decoder model are determined based on the update indication information.

In detail, in one embodiment of the disclosure, when the update indication information is used for instructing the UE to adjust the model parameters, the UE may obtain the new encoder model and the new decoder model by adjusting the model parameters of the original encoder model and the original decoder model.

Also, in another embodiment of the disclosure, the UE may generate the new encoder model and the new decoder model based on the model information of the new encoder model and/or the model information of the new decoder model if the update indication information includes both the model information of the new encoder model and/or the model information of the new decoder model. The type of the new encoder model and the type of the new decoder model are different from the type of the original encoder model and the type of the original decoder model.

It is noteworthy that, in one embodiment of the disclosure, if the update indication information includes model information of a new model only (e.g., only the model information of the new encoder model or only the model information of the new decoder model), the UE may determine the model information of another correspondingly matched new model based on the model information of the new model included in the update indication information.

For example, in one embodiment of the disclosure, when the update indication information includes only the model information of the new encoder model, after receiving the model information of the new encoder model, the UE may determine the model information of the corresponding new decoder model that matches the model information of the new encoder model, then determine a new decoder model based on the model information of the new decoder model, and determine the new encoder model based on the model information of the new encoder model.

At step 3, the new encoder model and the new decoder model are retained to obtain an updated encoder model and an updated decoder model.

The retraining method may refer to the description of above embodiments, which will not be repeated here in embodiments of the disclosure.

Further, in another embodiment of the disclosure, the UE may autonomously update the encoder model and the decoder model. Autonomously updating, by the UE, the encoder model and the decoder model may include the following steps a-b.

At step a: a distortion of the original encoder model and a distortion of the original decoder model are monitored.

In one embodiment of the disclosure, the distortion of the original encoder model and the distortion of the original decoder model may be monitored in real time. In detail, the information reported by the UE that is not encoded or compressed may be sequentially inputted into the encoder model and the decoder model as input information, such that the information is sequentially encoded and decoded to obtain output information. The distortion of the original encoder model and the distortion of the original decoder model may be determined by calculating a matching degree between the output information and the input information.

At step b, the original encoder model and the original decoder model are retained to obtain an updated encoder model and an updated decoder model when the distortions exceed a first threshold, in which the distortion of the updated encoder model and the distortion of the updated decoder model are both lower than a second threshold, and the second threshold is less than or equal to the first threshold.

In one embodiment of the disclosure, the distortions exceeding the first threshold means that the encoding and decoding accuracy of the original encoder model and the original decoder model is relatively low, thereby affecting the subsequent signal processing accuracy. Therefore, it is necessary to retrain the original encoder model and the original decoder model to obtain the updated encoder model and the updated decoder model. In addition, the encoding and decoding accuracy of the models should be guaranteed by ensuring that the distortion of the updated encoder model and the distortion of the updated decoder model are both lower than the second threshold.

Also, the training process may refer to the description of above embodiments, which will not be repeated here in embodiments of the disclosure.

In addition, in one embodiment of the disclosure, the first threshold and the second threshold may be preset.

At block 306c, the original encoder model is replaced directly with the updated encoder model.

In one embodiment of the disclosure, after replacing the original encoder model with the updated encoder model, the UE may use the updated encoder model to perform the decoding. Therefore, the encoding accuracy based on the updated encoder model is relatively high, thereby ensuring the subsequent signal processing accuracy.

In conclusion, in the method according to embodiments of the disclosure, the UE may first report the capability information to the network device, in which the capability information may be used for indicating the support capability of the UE for the AI and/or the ML; and then, the UE may acquire the model information of the encoder model to be trained and/or the model information of the decoder model to be trained which are sent by the network device, generate the encoder model and the decoder model based on the model information of the encoder model to be trained and/or the model information of the decoder model to be trained, and finally, the UE may send the model information of the decoder model to the network device, the model information of the decoder model being used for deploying the decoder model, such that the network device may deploy the decoder model based on the model information of the decoder model. Therefore, embodiments of the disclosure provide a method for generating and deploying a model, which may be used to train and deploy an AI/MI, model.

FIG. 3d is a schematic flowchart illustrating a model training and deploying method according to an embodiment of the disclosure. The method is performed by a network device. As illustrated in FIG. 3 d, the method may include the following.

At block 301d, capability information is reported to a network device.

At block 302d, model information of an encoder model to be trained and model information of a decoder model to be trained, sent by the network device, are acquired.

At block 303d, the encoder model and the decoder model are generated based on the model information of the encoder model to be trained and/or the model information of the decoder model to be trained.

At block 304d, the model information of the encoder model is sent to the network device, the model information of the encoder model being used for deploying the encoder model.

At block 305d, the encoder model and the decoder model are updated to generate an updated encoder model and an updated decoder model.

Other detailed introduction of the blocks 301d-305d may refer to the description of above embodiments, which will not be repeated here in embodiments of the disclosure.

At block 306d, differential model information between the model information of the updated encoder model and model information of an original encoder model is determined.

The related introduction about the model information may refer to the description of above embodiments, which will not be repeated here in embodiments of the disclosure.

At block 307d, the original encoder model is optimized based on the differential model information.

In detail, in one embodiment of the disclosure, after the original encoder model is optimized and adjusted based on the differential model information, the model information of the optimized and adjusted encoder model may be consistent with the model information of the updated encoder model generated in the above block 305d, such that the network device may subsequently use the updated encoder model to encode. Therefore, the decoding accuracy based on the updated encoder model is relatively high, thereby ensuring the subsequent signal processing accuracy.

In conclusion, in the method according to embodiments of the disclosure, the UE may first report the capability information to the network device, in which the capability information may be used for indicating the support capability of the UE for the AI and/or the ML; and then, the UE may acquire the model information of the encoder model to be trained and/or the model information of the decoder model to be trained which are sent by the network device, generate the encoder model and the decoder model based on the model information of the encoder model to be trained and/or the model information of the decoder model to be trained, and finally, the UE may send the model information of the decoder model to the network device, the model information of the decoder model being used for deploying the decoder model, such that the network device may deploy the decoder model based on the model information of the decoder model. Therefore, embodiments of the disclosure provide a method for generating and deploying a model, which may be used to train and deploy an AI/MI, model.

FIG. 3e is a schematic flowchart illustrating a model training and deploying method according to an embodiment of the disclosure. The method is performed by a network device. As illustrated in FIG. 3 e, the method may include the following.

At block 301e, capability information is reported to the network device.

At block 302e, model information of an encoder model to be trained and model information of a decoder model to be trained, sent by the network device, are acquired.

At block 303e, the encoder model and the decoder model are generated based on the model information of the encoder model to be trained and/or the model information of the decoder model to be trained.

At block 304e, the model information of the encoder model is sent to the network device, the model information of the encoder model being used for deploying the encoder model.

Other detailed introduction of the blocks 301e-304e may refer to the description of above embodiments, which will not be repeated here in embodiments of the disclosure.

At block 305e, the encoder model and decoder model are updated to generate an updated encoder model and an updated decoder model.

At block 306e, model information of the updated decoder model is sent to the network device.

In one embodiment of the disclosure, the model information of the updated decoder model may include:
all model information of the updated decoder model; or
differential model information between the model information of the updated decoder model and the model information of the original decoder model.

Also, in one embodiment of the disclosure, after the UE sends the model information of the updated decoder model to the network device, the network device may be caused to use the updated decoder model to decode. Therefore, the decoding accuracy based on the updated decoder model is relatively high, thereby ensuring the subsequent signal processing accuracy.

In conclusion, in the method according to embodiments of the disclosure, the UE may first the report capability information to the network device, in which the capability information may be used for indicating the support capability of the UE for the AI and/or the ML; and then, the UE may acquire the model information of the encoder model to be trained and/or the model information of the decoder model to be trained which are sent by the network device, generate the encoder model and the decoder model based on the model information of the encoder model to be trained and/or the model information of the decoder model to be trained, and finally, the UE may send the model information of the decoder model to the network device, the model information of the decoder model being used for deploying the decoder model, such that the network device may deploy the decoder model based on the model information of the decoder model. Therefore, embodiments of the disclosure provide a method for generating and deploying a model, which may be used to train and deploy an AI/MI, model.

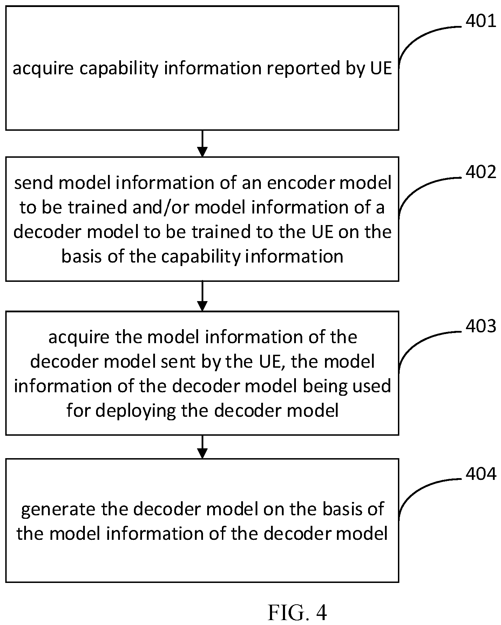

FIG. 4 is a schematic flowchart illustrating a model training and deploying method according to embodiments of the disclosure. The method is performed by a network device. As illustrated in FIG. 4, the method may include the following.

At block 401, capability information reported by UE is acquired.

In one embodiment of the disclosure, the capability information is used for indicating the support capabilities of the UE for the AI and/or the ML.

Also, in one embodiment of the disclosure, the model may include at least one of the followings:
an AI model; or
an ML model.

Further, in one embodiment of the disclosure, the capability information may include at least one of:
whether the UE supports AI;
whether the UE supports ML;
a type of AI and/or ML supported by the UE; or
maximum support capability information of the UE for the model, the maximum support capability information including structural information of a most complex model supported by the UE.

In one embodiment of the disclosure, the structural information may include, for example, a number of layers of the model, or the like.

At block 402, model information of an encoder model to be trained and/or model information of a decoder model to be trained are sent to the UE based on the capability information.

At block 403, the model information of the decoder model sent by the UE is acquired, the model information of the decoder model being used for deploying the decoder model.

In one embodiment of the disclosure, the model information of the decoder model is used for deploying the decoder model.

Also, in one embodiment of the disclosure, the model information of the decoder model may include at least one of:
a mode type of the decoder model; or
model parameters of the decoder model.

At block 404, the decoder model is generated based on the model information of the decoder model.

Other detailed introduction of the blocks 401-404 may refer to the description of above embodiments, which will not be repeated here in embodiments of the disclosure.

In conclusion, in the method according to embodiment of the disclosure, the UE may first report the capability information to the network device, in which the capability information may be used for indicating the support capabilities of the UE for the AI and/or the ML; and then, the UE may acquire the model information of the encoder model to be trained and/or the model information of the decoder model to be trained which are sent by the network device, generate the encoder model and the decoder model based on the model information of the encoder model to be trained and/or the model information of the decoder model to be trained, and finally, the UE may send the model information of the decoder model to the network device, the model information of the decoder model being used for deploying the decoder model, such that the network device may deploy the decoder model based on the model information of the decoder model. Therefore, embodiments of the disclosure provide a method for generating and deploying a model, which may be used to train and deploy an AI/MI, model.

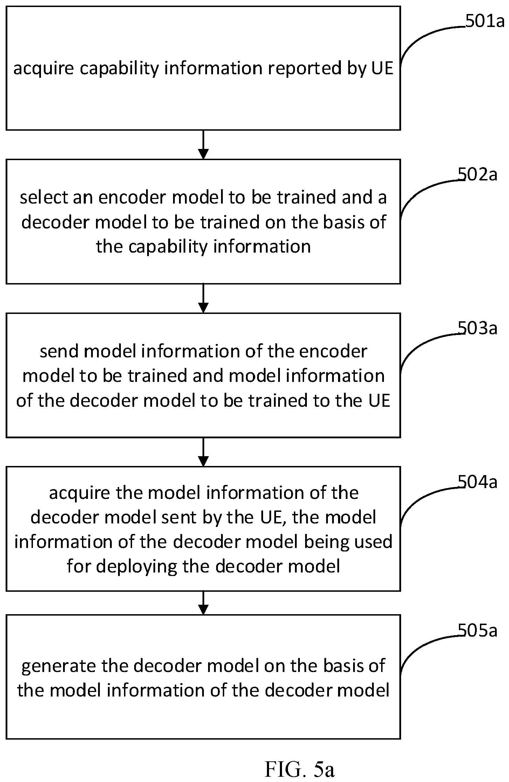

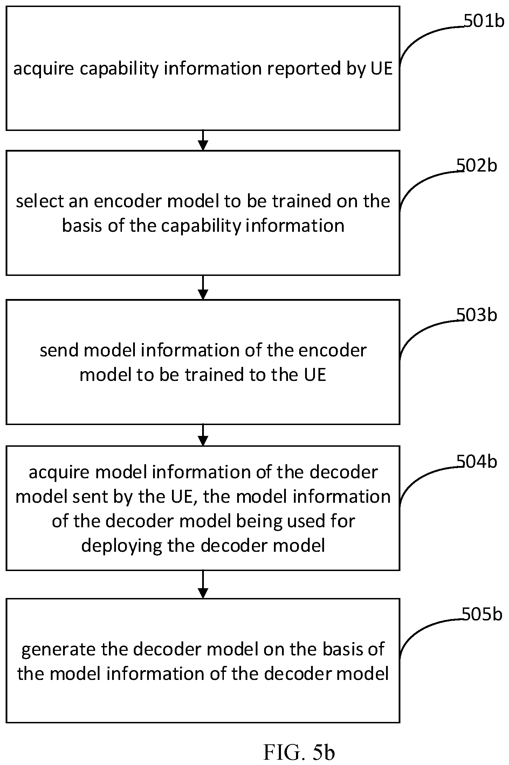

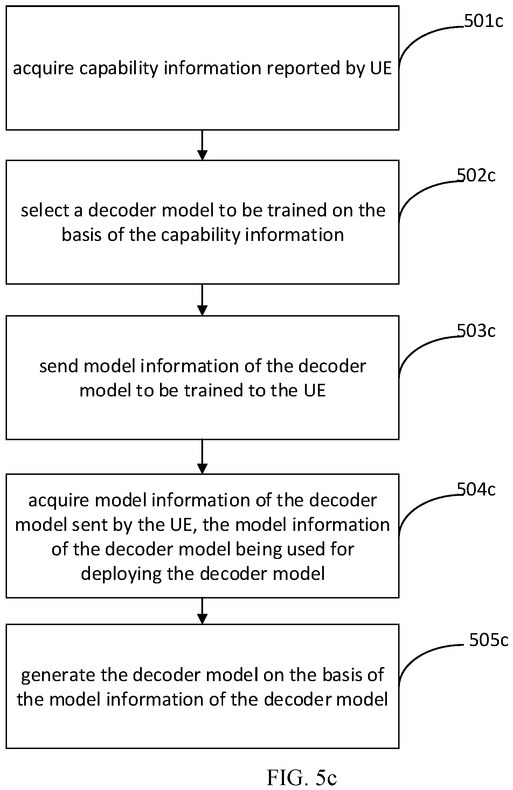

FIG. 5a is a schematic flowchart illustrating a model training and deploying method according to an embodiment of the disclosure. The method is performed by a network device. As illustrated in FIG. 5, the method may include the following.

At block 501a, capability information reported by UE is acquired.

In one embodiment of the disclosure, the capability information is used for indicating the support capabilities of the UE for the AI and/or the ML.

At block 502a, an encoder model to be trained and a decoder model to be trained are selected based on the capability information.

The encoder model to be trained is a model supported by the UE, and the decoder model to be trained is a model supported by the network device.

At block 503a, model information of the encoder model to be trained and model information of the decoder model to be trained are sent to the UE.

At block 504a, the model information of the decoder model sent by the UE is acquired, the model information of the decoder model being used for deploying the decoder model.

At block 505a, the decoder model is generated based on the model information of the decoder model.

Other detailed introduction of the blocks 501a-505a may refer to the description of above embodiments, which will not be repeated here in embodiments of the disclosure.

In conclusion, in the methods according to embodiments of the disclosure, the UE may first report the capability information to the network device, in which the capability information may be used for indicating the support capabilities of the UE for the AI and/or the ML; and then, the UE may acquire the model information of the encoder model to be trained and/or the model information of the decoder model to be trained which are sent by the network device, generate the encoder model and the decoder model based on the model information of the encoder model to be trained and/or the model information of the decoder model to be trained, and finally, the UE may send the model information of the decoder model to the network device, the model information of the decoder model being used for deploying the decoder model, such that the network device may deploy the decoder model based on the model information of the decoder model. Therefore, embodiments of the disclosure provide a method for generating and deploying a model, which may be used to train and deploy an AI/MI, model.

FIG. 5b is a schematic flowchart illustrating a model training and deploying method according to an embodiment of the disclosure. The method is performed by a network device. As illustrated in FIG. 5, the method may include the following.

At block 501b, capability information reported by UE is acquired.

In one embodiment of the disclosure, the capability information is used for indicating the support capabilities of the UE for the AI and/or the ML.

At block 502b, an encoder model to be trained is selected based on the capability information.

The encoder model to be trained is a model supported by the UE.

At block 503b, model information of the encoder model to be trained is sent to the UE.

At block 504b, the model information of the decoder model sent by the UE is acquired, the model information of the decoder model being used for deploying the decoder model.

At block 505b, the decoder model is generated based on the model information of the decoder model.

Other detailed introduction of the blocks 501b-505b may refer to the description of above embodiments, which will not be repeated here in embodiments of the disclosure.

In conclusion, in the methods according to embodiments of the disclosure, the UE may first report the capability information to the network device, in which the capability information may be used for indicating the support capabilities of the UE for the AI and/or the ML; and then, the UE may acquire the model information of the encoder model to be trained and/or the model information of the decoder model to be trained which are sent by the network device, generate the encoder model and the decoder model based on the model information of the encoder model to be trained and/or the model information of the decoder model to be trained, and finally, the UE may send the model information of the decoder model to the network device, the model information of the decoder model being used for deploying the decoder model, such that the network device may deploy the decoder model based on the model information of the decoder model. Therefore, embodiments of the disclosure provide a method for generating and deploying a model, which may be used to train and deploy an AI/MI, model.

FIG. 5c is a schematic flowchart illustrating a model training and deploying method according to an embodiment of the disclosure. The method is performed by a network device. As illustrated in FIG. 5, the method may include the following.

At block 501c, capability information reported by UE is acquried.

In one embodiment of the disclosure, the capability information is used for indicating the support capabilities of the UE for the AI and/or the ML.

At block 502c, a decoder model to be trained is selected based on the capability information.

The decoder model to be trained is a model supported by the network device.

At block 503c, model information of the decoder model to be trained is sent to the UE.

At block 504c, the model information of the decoder model sent by the UE is acquired, the model information of the decoder model being used for deploying the decoder model.

At block 505c, the decoder model is generated based on the model information of the decoder model.

Other detailed introduction of the blocks 501c-505c may refer to the description of above embodiments, which will not be repeated here in embodiments of the disclosure.

In conclusion, in the methods according to embodiments of the disclosure, the UE may first the report capability information to the network device, in which the capability information may be used for indicating the support capabilities of the UE for the AI and/or the ML; and then, the UE may acquire the model information of the encoder model to be trained and/or the model information of the decoder model to be trained which are sent by the network device, generate the encoder model and the decoder model based on the model information of the encoder model to be trained and/or the model information of the decoder model to be trained, and finally, the UE may send the model information of the decoder model to the network device, the model information of the decoder model being used for deploying the decoder model, such that the network device may deploy the decoder model based on the model information of the decoder model. Therefore, embodiments of the disclosure provide a method for generating and deploying a model, which may be used to train and deploy an AI/MI, model.

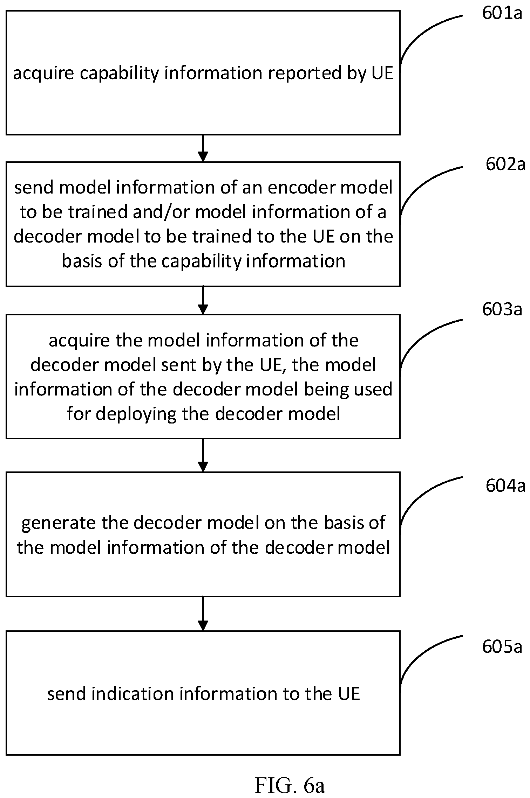

FIG. 6a is a schematic flowchart illustrating a model training and deploying method according to embodiments of the disclosure. The method is performed by a network device. As illustrated in FIG. 6a, the method may include the following.

At block 601a, capability information reported by UE is acquired.

In one embodiment of the disclosure, the capability information is used for indicating the support capabilities of the UE for the AI and/or the ML.

At block 602a, model information of an encoder model to be trained and/or model information of a decoder model to be trained are sent to the UE based on the capability information.

At block 603a, the model information of the decoder model sent by the UE is acquired, the model information of the decoder model being used for deploying the decoder model.

At block 604a, the decoder model is generated based on the model information of the decoder model.

Other detailed introduction of the blocks 601a-604a may refer to the description of above embodiments, which will not be repeated here in embodiments of the disclosure.

At block 605a, indication information is sent to the UE.

In one embodiment of the disclosure, the indication information is used for indicating an information type when the UE reports to the network device.

Also, in one embodiment of the disclosure, the information type may include at least one of original reported information that is not encoded by the encoder model or information obtained by encoding, with the encoder model, the original reported information.

Further, in one embodiment of the disclosure, the reported information is information to be reported by the UE to the network device. Also, the reported information may include CSI information.

Also, the CSI information may include at least one of:
channel information;
feature matrix information of a channel;
feature vector information of the channel;
PMI;
CQI;
RI;
RSRP;
RSRQ;
SINR; or
reference signal resource indicator.

In conclusion, in the methods according to embodiments of the disclosure, the UE may first report the capability information to the network device, in which the capability information may be used for indicating the support capabilities of the UE for the AI and/or the MI,; and then, the UE may acquire the model information of the encoder model to be trained and/or the model information of the decoder model to be trained which are sent by the network device, generate the encoder model and the decoder model based on the model information of the encoder model to be trained and/or the model information of the decoder model to be trained, and finally, the UE may send the model information of the decoder model to the network device, the model information of the decoder model being used for deploying the decoder model, such that the network device may deploy the decoder model based on the model information of the decoder model. Therefore, embodiments of the disclosure provide a method for generating and deploying a model, which may be used to train and deploy an AI/MI, model.

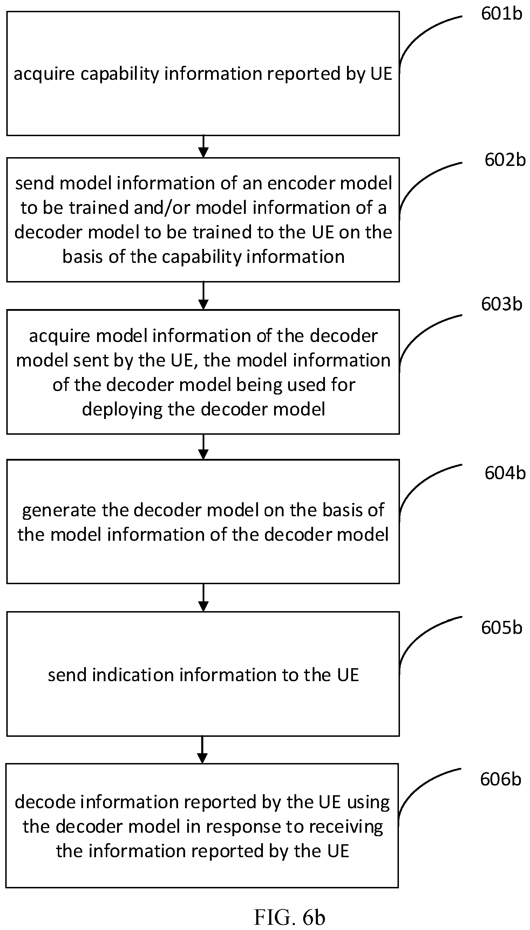

FIG. 6b is a schematic flowchart illustrating a model training and deploying method according to an embodiment of the disclosure. The method is performed by a network device. As illustrated in FIG. 6b, the method may include the following.

At block 601b, capability information reported by UE is acquired.

In one embodiment of the disclosure, the capability information is used for indicating the support capabilities of the UE for the AI and/or the ML.

At block 602b, model information of an encoder model to be trained and/or model information of a decoder model to be trained to the UE are sent based on the capability information.

At block 603b, the model information of the decoder model sent by the UE is acquired, the model information of the decoder model being used for deploying the decoder model.

At block 604b, the decoder model is generated based on the model information of the decoder model.

At block 605b, indication information is sent to the UE, the indication information being used for indicating that an information type when the UE reports to the network device includes information obtained by encoding, with the encoder mode, the original reported information.

Other detailed introduction of the blocks 601b-605b may refer to the description of above embodiments, which will not be repeated here in embodiments of the disclosure.

At block 606b, information reported by the UE is decoded using the decoder model in response to receiving the information reported by the UE.

In one embodiment of the disclosure, since the information type indicated in the above block 605b when the UE reports is the information encoded by the encoder model, the information reported by the UE and received by the network device in the block 606b is essentially the information encoded by the encoder model. Based on this, the network device needs to use a decoder model (e.g., the decoder model generated in the above block 606b) to decode the information reported by the UE to obtain the original reported information.

In conclusion, in the methods according to embodiments of the disclosure, the UE may first report the capability information to the network device, in which the capability information may be used for indicating the support capabilities of the UE for the AI and/or the MI,; and then, the UE may acquire the model information of the encoder model to be trained and/or the model information of the decoder model to be trained which are sent by the network device, generate the encoder model and the decoder model based on the model information of the encoder model to be trained and/or the model information of the decoder model to be trained, and finally, the UE may send the model information of the decoder model to the network device, the model information of the decoder model being used for deploying the decoder model, such that the network device may deploy the decoder model based on the model information of the decoder model. Therefore, embodiments of the disclosure provide a method for generating and deploying a model, which may be used to train and deploy an AI/MI, model.

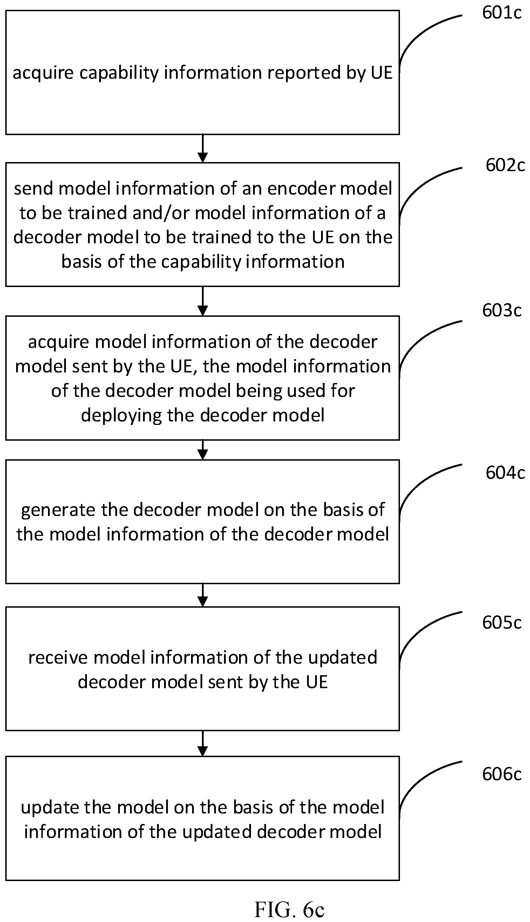

FIG. 6c is a schematic flowchart illustrating a model training and deploying method according to an embodiment of the disclosure. The method is performed by a network device. As illustrated in FIG. 6c, the method may include the following.

At block 601c, capability information reported by UE is acquired.

At block 602c, model information of an encoder model to be trained and/or model information of a decoder model to be trained are sent to the UE based on the capability information.

At block 603c, the model information of the decoder model sent by the UE is acquired, the model information of the decoder model being used for deploying the decoder model.

At block 604c, the decoder model is generated based on the model information of the decoder model.

Other detailed introduction of the blocks 601c-604c may refer to the description of above embodiments, which will not be repeated here in embodiments of the disclosure.

At block 605c, model information of the updated decoder model sent by the UE is received.

In one embodiment of the disclosure, the model information of the updated decoder model may include:
all model information of the updated decoder model; or
differential model information between the model information of the updated decoder model and the model information of the original decoder model.

It is noteworthy that, in one embodiment of the disclosure, when the UE updates the encoder model and the decoder model based on an indication from the network device, for the network device, after performing the above block 604c, the network device also needs to send a piece of update indication information to the UE, the update indication information being used for instructing the UE to adjust model parameters. Or, the update indication information includes model information of a new encoder model and/or model information of a new decoder model. A type of the new encoder model and a type of the new decoder model are different from a type of the original encoder model and a type of the original decoder model. Then, the UE may update the model based on the update indication information, determine the model information of the updated decoder model and send the model information to the network device.

It is noteworthy that, in one embodiment of the disclosure, if the update indication information includes the model information of the new encoder model and/or the model information of the new decoder model, the network device also needs to re-select, based on the capability information, a new encoder model and/or a new decoder model whose types are different from those of the original encoder model and the original decoder model before sending the update indication information to the UE. The new encoder model may be a model supported by the UE, and the new encoder model may be a model supported by the network device. Then, the network device may send the update indication information, including the model information of the new encoder model and/or the model information of the new decoder model, to the UE based on the re-selected new encoder model and/or new decoder model.

Also, in another embodiment of the disclosure, when the UE autonomously updates the encoder model and the decoder model, for the network device, the network device may directly receive the model information of the updated decoder model sent by the UE without sending the update indication information to the UE after performing the above block 604c.

At block 606c, the model is updated based on the model information of the updated decoder model.

In one embodiment of the disclosure, the details of "updating the model based on the model information of the updated decoder model" will be described in subsequent embodiments.

In conclusion, in the methods according to embodiments of the disclosure, the UE may first report the capability information to the network device, in which the capability information may be used for indicating the support capabilities of the UE for the AI and/or the MI,; and then, the UE may acquire the model information of the encoder model to be trained and/or the model information of the decoder model to be trained which are sent by the network device, generate the encoder model and the decoder model based on the model information of the encoder model to be trained and/or the model information of the decoder model to be trained, and finally, the UE may send the model information of the decoder model to the network device, the model information of the decoder model being used for deploying the decoder model, such that the network device may deploy the decoder model based on the model information of the decoder model. Therefore, embodiments of the disclosure provide a method for generating and deploying a model, which may be used to train and deploy an AI/MI, model.

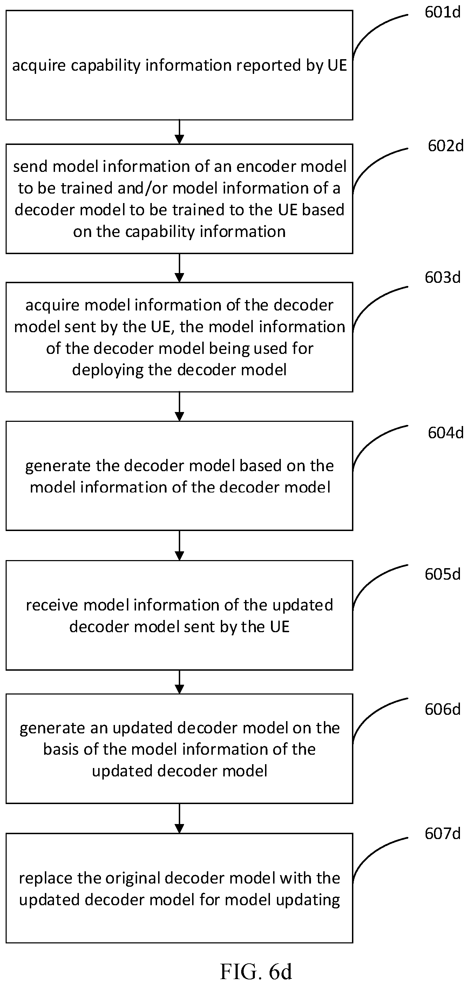

FIG. 6d is a schematic flowchart illustrating a model training and deploying method according to an embodiment of the disclosure. The method is performed by a network device. As illustrated in FIG. 6d, the method may include the following.

At block 601d, capability information reported by UE is acquired.

At block 602d, model information of an encoder model to be trained and/or model information of a decoder model to be trained to the UE are sent based on the capability information.

At block 603d, the model information of the decoder model sent by the UE is acquired, the model information of the decoder model being used for deploying the decoder model.

At block 604d, the decoder model is generated based on the model information of the decoder model.

Other detailed introduction of the blocks 601d-604d may refer to the description of above embodiments, which will not be repeated here in embodiments of the disclosure.

At block 605d, model information of the updated decoder model sent by the UE is received.

In one embodiment of the disclosure, the model information of the updated decoder model may include:
all model information of the updated decoder model; or
differential model information between the model information of the updated decoder model and the model information of the original decoder model.

At block 606d, an updated decoder model is generated based on the model information of the updated decoder model.

In one embodiment of the disclosure, when the model information of the updated decoder model received in the above block 605b is "all the model information of the updated decoder model", the network device may directly generate the updated decoder model based on all the model information.

Also, in another embodiment of the disclosure, when the model information of the updated decoder model received in the above block 605b is "the differential model information between the model information of the updated decoder model and the model information of the original decoder model", the network device may first determine the model information of its own original decoder model, then determine the model information of the updated decoder model based on the model information of the original decoder model and the differential model information, and then generate the updated decoder model based on the model information of the updated decoder model.

At block 607d, the original decoder model is replaced with the updated decoder model for model updating.

In one embodiment of the disclosure, after replacing the original decoder model with the updated decoder model, the network device may use the updated decoder model to decode. Therefore, the decoding accuracy based on the updated decoder model is relatively high, thereby ensuring the subsequent signal processing accuracy.

In conclusion, in the methods according to embodiments of the disclosure, the UE may first report the capability information to the network device, in which the capability information may be used for indicating the support capabilities of the UE for the AI and/or the MI,; and then, the UE may acquire the model information of the encoder model to be trained and/or the model information of the decoder model to be trained which are sent by the network device, generate the encoder model and the decoder model based on the model information of the encoder model to be trained and/or the model information of the decoder model to be trained, and finally, the UE may send the model information of the decoder model to the network device, the model information of the decoder model being used for deploying the decoder model, such that the network device may deploy the decoder model based on the model information of the decoder model. Therefore, embodiments of the disclosure provide a method for generating and deploying a model, which may be used to train and deploy an AI/MI, model.

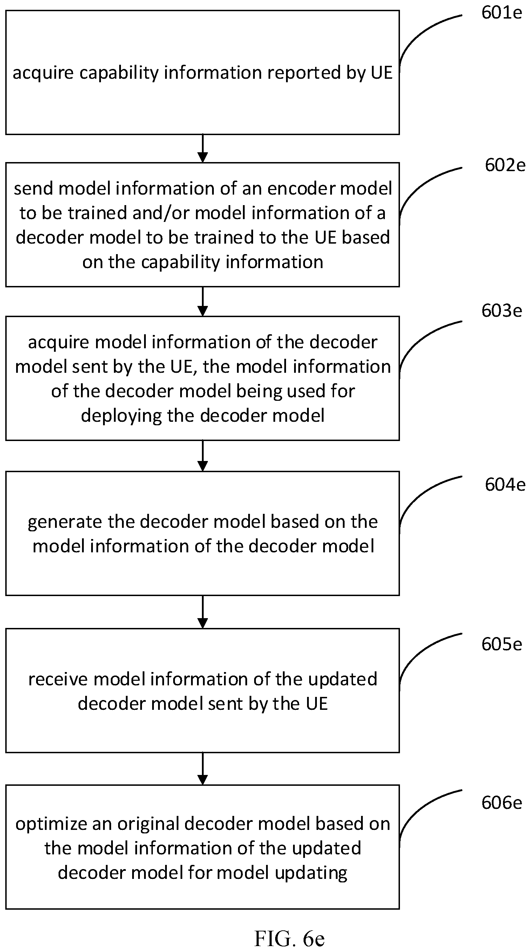

FIG. 6e is a schematic flowchart illustrating a model training and deploying method according to an embodiment of the disclosure. The method is performed by a network device. As illustrated in FIG. 6e, the method may include the following.

At block 601e, capability information reported by UE is acquired.

At block 602e, model information of an encoder model to be trained and/or model information of a decoder model to be trained are sent to the UE based on the capability information.

At block 603e, the model information of the decoder model sent by the UE is acquired, the model information of the decoder model being configured for deploying the decoder model.

At block 604e, the decoder model is generated based on the model information of the decoder model.

Other detailed introduction of the blocks 601e-604e may refer to the description of above embodiments, which will not be repeated here in embodiments of the disclosure.

At block 605e, model information of the updated decoder model sent by the UE is received.

In one embodiment of the disclosure, the model information of the updated decoder model may include:
all model information of the updated decoder model; or
differential model information between the model information of the updated decoder model and the model information of the original decoder model.

At block 606e, an original decoder model is optimized based on the model information of the updated decoder model for model updating.

In one embodiment of the disclosure, when the model information of the updated decoder model received in the above block 605d is "all the model information of the updated decoder model", the network device may first determine the model difference information between all the model information and the model information of the original decoder model, and then optimize the original decoder model based on the model difference information for model updating.

In addition, in another embodiment of the disclosure, when the model information of the updated decoder model received in the above block 605d is "the differential model information between the model information of the updated decoder model and the model information of the original decoder model", the network device may directly optimize the original decoder model based on the differential model information for model updating.

In detail, in one embodiment of the disclosure, after the original decoder model is optimized based on the differential model information, the model information of the optimized and adjusted decoder model may be consistent with the model information of the updated decoder model, so that the network device may subsequently use the updated decoder model to decode. Therefore, the decoding accuracy based on the updated decoder model is relatively high, thereby ensuring the subsequent signal processing accuracy.

In conclusion, in the methods according to embodiments of the disclosure, the UE may first report the capability information to the network device, in which the capability information may be used for indicating the support capabilities of the UE for the AI and/or the MI,; and then, the UE may acquire the model information of the encoder model to be trained and/or the model information of the decoder model to be trained which are sent by the network device, generate the encoder model and the decoder model based on the model information of the encoder model to be trained and/or the model information of the decoder model to be trained, and finally, the UE may send the model information of the decoder model to the network device, the model information of the decoder model being used for deploying the decoder model, such that the network device may deploy the decoder model based on the model information of the decoder model. Therefore, embodiments of the disclosure provide a method for generating and deploying a model, which may be used to train and deploy an AI/MI, model.

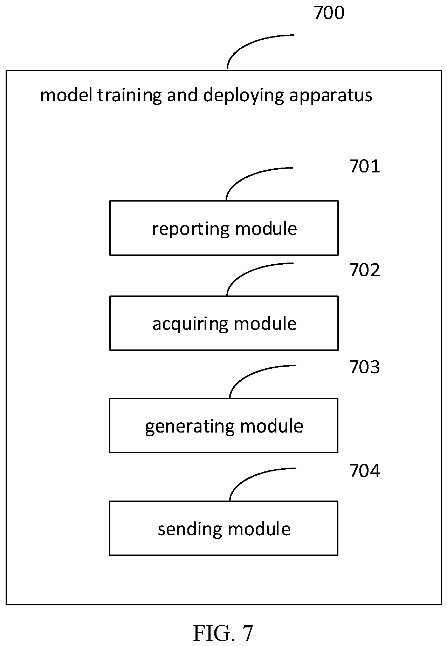

FIG. 7 is a schematic structural diagram illustrating a model training and deploying apparatus according to an embodiment of the disclosure. As illustrated in FIG. 7, the apparatus may include:
a reporting module, configured to report capability information to a network device, the capability information being used for indicating support capabilities of the UE for an AI and/or an ML;
an acquiring module, configured to acquire model information of an encoder model to be trained and/or model information of a decoder model to be trained which are sent by the network device;
a generating module, configured to generate the encoder model and the decoder model based on the model information of the encoder model to be trained and/or the model information of the decoder model to be trained; and
a sending module, configured to send the model information of the decoder model to the network device, the model information of the decoder model being used for deploying the decoder model.

In conclusion, in the apparatuses according to embodiments of the disclosure, the UE may first report the capability information to the network device, in which the capability information may be used for indicating the support capabilities of the UE for the AI and/or the ML; then, the UE may acquire the model information of the encoder model to be trained and/or the model information of a decoder model to be trained which are sent by the network device, and generate the encoder model and the decoder model based on the model information of the encoder model to be trained and/or the model information of the decoder model to be trained; and finally, the UE sends the model information of the decoder model to the network device, the model information of the decoder model being used for deploying the decoder model, such that the network device may deploy the decoder model based on the model information of the decoder model. Therefore, embodiments of the disclosure provide a method for generating and deploying a model, which may be used to train and deploy an AI/MI, model.

In some examples, in one embodiment of the disclosure, the model may include at least one of:
an AI model; or
an ML model.

In some examples, in one embodiment of the disclosure, the capability information may include at least one of:
whether the UE supports the AI;
whether the UE supports the ML;
a type of the AI and/or the ML supported by the UE; or
maximum support capability information of the UE for the model, the maximum support capability information comprising structural information of a most complex model supported by the UE.

In some examples, in one embodiment of the disclosure, the generating module is further configured to:
deploy the encoder model to be trained based on the model information of the encoder model to be trained, and/or deploy the decoder model to be trained based on the model information of the decoder model to be trained;
determine sample data based on the measurement information and/or historical measurement information of the UE; and
train the encoder model to be trained and the decoder model to be trained based on the sample data to generate the encoder model and the decoder model.

In some examples, in one embodiment of the disclosure, the model information of the decoder model may include at least one of:
a model type of the model; or
model parameters of the model.

In some examples, in one embodiment of the disclosure, the apparatus is further configured to:
acquire indication information sent by the network device, the indication information being used for indicating an information type when the UE reports to the network device; the information type including at least one of original reported information that is not encoded by the encoder model or information obtained by encoding, with the encoder model, the original reported information; and
report to the network device based on the indication information.

In some examples, in one embodiment of the disclosure, the reported information is information to be reported by the UE to the network device; the reported information includes CSI information; and
the CSI information includes at least one of:
channel information;
feature matrix information of a channel;
feature vector information of the channel;
PMI;
CQI;
RI;
RSRP;
RSRQ;
SINR; or
reference signal resource indicator.

In some examples, in one embodiment of the disclosure, the information type indicated by the indication information includes the information obtained by encoding, with the encoder model, the original reported information.

The apparatus is further configured to:
encode the reported information with the encoder model; and
report the encoded information to the network device.

In some examples, in one embodiment of the disclosure, the apparatus is further configured to:
update the encoder model and the decoder model to generate an updated encoder model and an updated decoder model.

In some examples, in one embodiment of the disclosure, the apparatus is further configured to:
acquire update indication information sent by the network device, the update indication information being used for instructing the UE to adjust model parameters; or the update indication information including model information of a new encoder model and/or model information of a new decoder model, and a type of the new encoder model and a type of the new decoder model being different from a type of an original encoder model and a type of an original decoder model;
determine the new encoder model and the new decoder model based on the update indication information; and
retrain the new encoder model and the new decoder model to obtain an updated encoder model and an updated decoder model.

In some examples, in one embodiment of the disclosure, the apparatus is further configured to:
monitor a distortion of the original encoder model and a distortion of the original decoder model; and
retrain the original encoder model and the original decoder model to obtain an updated encoder model and an updated decoder model when the distortions exceed a first threshold. The distortion of the updated encoder model and the distortion of the updated decoder model are both lower than a second threshold, and the second threshold is less than or equal to the first threshold.

In some examples, in one embodiment of the disclosure, the apparatus is further configured to:
obtain, by the UE, the new encoder model and the new decoder model by adjusting the model parameters of the original encoder model and the original decoder model when the update indication information is used for instructing the UE to adjust the model parameters; or
generate, by the UE, the new encoder model and the new decoder model based on the model information of the new encoder model and/or the model information of the new decoder model when the update indication information includes the model information of the new encoder model and/or model information of the new decoder model. A type of the new encoder model and a type of the new decoder model being different from a type of the original encoder model and a type of the original decoder model.

In some examples, in one embodiment of the disclosure, the apparatus is further configured to:
replace the original encoder model directly with the updated encoder model.

In some examples, in one embodiment of the disclosure, the apparatus is further configured to:
determine differential model information between the model information of the updated encoder model and model information of an original encoder model; and
optimize the original encoder model based on the differential model information.

In some examples, in one embodiment of the disclosure, the apparatus is further configured to:
send model information of the updated decoder model to the network device.

In some examples, in one embodiment of the disclosure, the model information of the updated decoder model may include:
all model information of the updated decoder model; or
differential model information between the model information of the updated decoder model and the model information of the original decoder model.

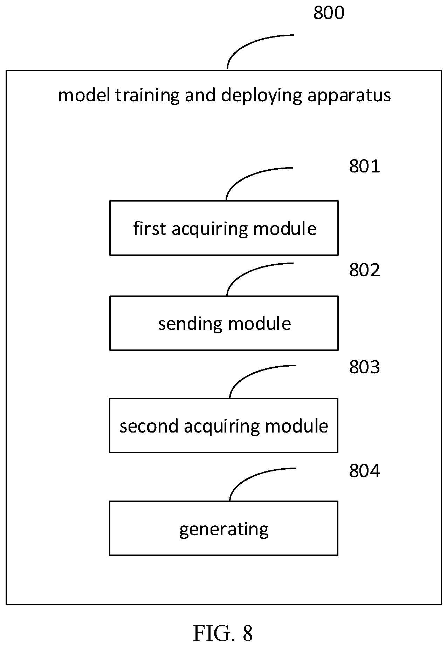

FIG. 8 is a schematic structural diagram illustrating a model training and deploying apparatus according to embodiments of the disclosure. As illustrated in FIG. 8, the apparatus may include:
a first acquiring module, configured to acquire capability information reported by UE, the capability information being used for indicating support capabilities of the UE for an AI and/or an ML;
a sending module, configured to send model information of an encoder model to be trained and/or model information of a decoder model to be trained to the UE based on the capability information;
a second acquiring module, configured to acquire model information of the decoder model sent by the UE, the model information of the decoder model being used for deploying the decoder model; and
a generating module, configured to generate the decoder model based on the model information of the decoder model.

In conclusion, in the apparatuses according to embodiments of the disclosure, the UE may first report the capability information to the network device, in which the capability information may be used for indicating the support capabilities of the UE for the AI and/or the ML; then, the UE may acquire the model information of the encoder model to be trained and/or the model information of a decoder model to be trained which are sent by the network device, and generate the encoder model and the decoder model based on the model information of the encoder model to be trained and/or the model information of the decoder model to be trained; and finally, the UE sends the model information of the decoder model to the network device, the model information of the decoder model being used for deploying the decoder model, such that the network device may deploy the decoder model based on the model information of the decoder model. Therefore, embodiments of the disclosure provide a method for generating and deploying a model, which may be used to train and deploy an AI/MI, model.

In some examples, in one embodiment of the disclosure, the model may include at least one of:
an AI model; or
an ML model.

In some examples, in one embodiment of the disclosure, the capability information may include at least one of:
whether the UE supports the AI;
whether the UE supports the ML;
a type of the AI and/or the ML supported by the UE; or
maximum support capability information of the UE for the model, the maximum support capability information including structural information of a most complex model supported by the UE.

In some examples, in one embodiment of the disclosure, the sending module is further configured to:
select the encoder model to be trained and/or the decoder model to be trained based on the capability information, the encoder model to be trained being a model supported by the UE, and the decoder model to be trained being a model supported by the network device; and
send the model information of the encoder model to be trained and/or the model information of the decoder model to be trained to the UE.

In some examples, in one embodiment of the disclosure, the model information of the decoder model may include at least one of:
a mode type of the model; or
model parameters of the model.

In some examples, in one embodiment of the disclosure, the apparatus is further configured to:
send indication information to the UE, the indication information being used for indicating an information type when the UE reports to the network device; and
the information type includes at least one of:
   original reported information that is not encoded by the encoder model; or
   information obtained by encoding, with the encoder model, the original reported information.

In some examples, in one embodiment of the disclosure, the reported information is information to be reported by the UE to the network device; and the reported information includes CSI information; and
the CSI information includes at least one of:
channel information;
feature matrix information of a channel;
feature vector information of the channel;
PMI;
CQI;
RI;
RSRP;
RSRQ;
SINR; or
reference signal resource indicator.

In some examples, in one embodiment of the disclosure, the information type indicated by the indication information includes the information obtained by encoding, with the encoder model, the original reported information.

The apparatus is further configured to:
decode information reported by the UE using the decoder model in response to receiving the information reported by the UE.

In some examples, in one embodiment of the disclosure, the apparatus is further configured to:
receive model information of the updated decoder model sent by the UE; and
update the model based on the model information of the updated decoder model.

In some examples, in one embodiment of the disclosure, the apparatus is further configured to:
send update indication information to the UE,
the update indication information being used for instructing the UE to adjust model parameters; or
the update indication information including model information of a new encoder model and/or model information of a new decoder model, and a type of the new encoder model and a type of the new decoder model being different from a type of an original encoder model and a type of an original decoder model.

In some examples, in one embodiment of the disclosure, the apparatus is further configured for:
all model information of the updated decoder model; or
differential model information between the model information of the updated decoder model and the model information of the original decoder model.

In some examples, in one embodiment of the disclosure, the updating the model based on the model information of the updated decoder model includes:
generating an updated decoder model based on the model information of the updated decoder model; and
replacing the original decoder model with the updated decoder model for model updating.

In some examples, in one embodiment of the disclosure, the updating the model based on the model information of the updated decoder model includes:
optimizing an original decoder model based on the model information of the updated decoder model for model updating.

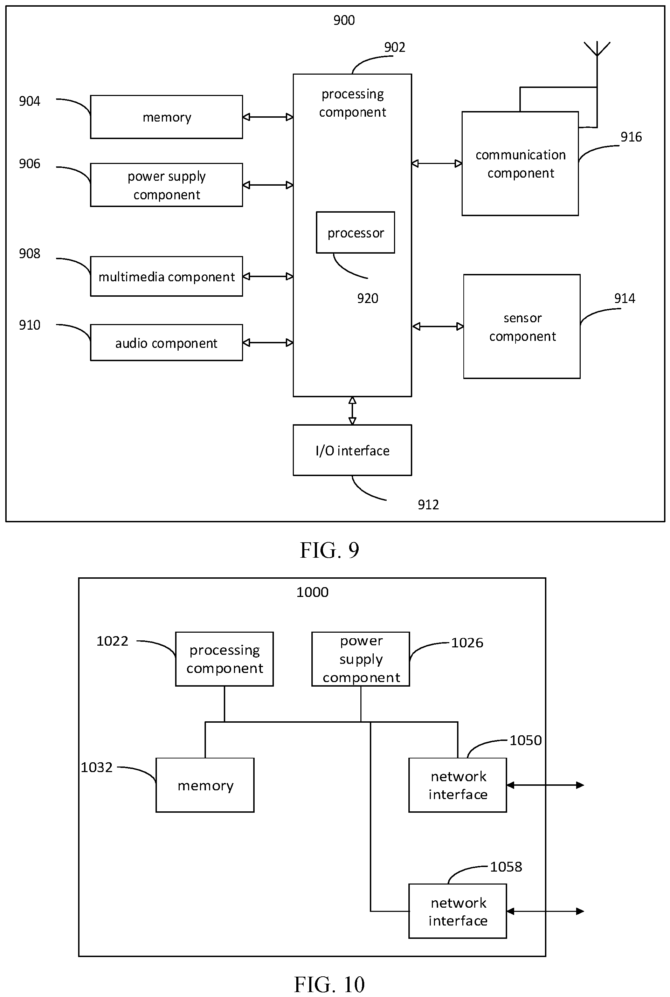

FIG. 9 is a block diagram illustrating a UE 900 according to an embodiment of the disclosure. For example, the UE 900 may be a mobile phone, a computer, a digital broadcast terminal device, a message transceiver device, a game console, a tablet device, a medical device, a fitness device, a personal digital assistant, or the like.

As illustrated in FIG. 9, the UE 900 may include one or more of the following components: a processing component 902, a memory 904, a power supply component 906, a multimedia component 908, an audio component 910, an input/output (I/O) interface 912, a sensor component 913, and a communication component 916.

The processing component 902 typically controls overall operations of the UE 900, such as the operations associated with display, telephone calls, data communications, camera operations, and recording operations. The processing component 902 may include at least one processor 920 to execute instructions to complete all or part of the steps of the method described above. Moreover, the processing component 902 may include at least one module which facilitates the interaction between the processing component 902 and other components. For instance, the processing component 902 may include a multimedia module to facilitate the interaction between the multimedia component 908 and the processing component 902.

The memory 904 is configured to store various types of data to support operations in the UE 900. Examples of such data include instructions for any applications or methods operated on the UE 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power supply component 906 provides power to various components of the UE 900. The power supply component 906 may include a power management system, one or more power sources, and any other components associated with the generation, management, and distribution of power in the UE 900.

The multimedia component 908 includes a screen providing an output interface between the UE 900 and a user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touches, slips, and gestures on the touch panel. The touch sensors may not only sense a boundary of a touch or slip action, but also sense a wake-up time and a pressure associated with the touch or slip action. In some embodiments, the multimedia component 908 includes a front camera and/or a rear camera. The front camera and/or the rear camera may receive an external multimedia datum while the UE 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone (MIC) that is configured to receive external audio signals when the UE 900 is in operating modes such as Call Mode, Record Mode, and Speech Recognition Mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 913 includes one or more sensors to provide status assessments of various aspects of the UE 900. For instance, the sensor component 913 may detect an open/closed status of the device 900, relative positioning of components, e.g., a display and a keypad, of the UE 900, a change in position of the UE 900 or a component of the UE 900, a presence or absence of user contact with the UE 900, an orientation or an acceleration/deceleration of the UE 900, and a change in temperature of the UE 900. The sensor component 913 may include a proximity sensor configured to detect the presence of nearby objects without any physical contact. The sensor component 913 may also include a light sensor, such as a CMOS or CCD image sensor, for use in imaging applications. In some embodiments, the sensor component 913 may also include an accelerometer sensor, a gyroscope sensor, a magnetic sensor, a pressure sensor, or a temperature sensor.

The communication component 916 is configured to facilitate wired or wireless communication between the UE 900 and other devices. The UE 900 may access a wireless network on the basis of a communication standard, such as WiFi, 2G, or 3G, or a combination thereof. In one embodiment, the communication component 916 receives a broadcast signal or broadcast associated information from an external broadcast management system via a broadcast channel. In an embodiment, the communication component 916 further includes a near field communication (NFC) module to facilitate short-range communications. For example, the NFC module may be implemented on the basis of a radio frequency identification (RFID) technology, an infrared data association (IrDA) technology, an ultra-wideband (UWB) technology, a Bluetooth (BT) technology, and other technologies.

In embodiments, the UE 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

FIG. 10 is a block diagram illustrated a network-side device 1000 according to an embodiment of the disclosure. For example, the network-side device 1000 may be provided as a network-side device. As illustrated FIG. 10, the network-side device 1000 may include a processing component 1011 which further includes one or more processors, and memory resources represented by a memory 1032 for storing instructions executable by the processing component 1022, such as applications. The applications stored in the memory 1032 may include one or more modules, each corresponding to a set of instructions. In addition, the processing component 1010 is configured to execute instructions to execute any method of the above methods applied to the network-side device, for example, as shown in FIG. 1.

The network-side device 1000 may also include a power supply component 1026 configured to perform power management for the network-side device 1000, a wired or wireless network interface 1050 configured to connect the network-side device 1000 to a network, and an I/O interface 1058. The network-side device 1000 may operate on the basis of an operating system stored in the memory 1032, such as Windows Server TM, Mac OS XTM, UnixTM, LinuxTM, FreeBSDTM or analogs.

In above embodiments according to the disclosure, the methods according to embodiments of the disclosure are introduced from the perspectives of the network-side device and the UE, respectively. In order to achieve various functions in the methods according to embodiments of the disclosure, the network-side device and the UE may implement various functions in the form of a hardware structure, a software module, or a hardware structure and a software module. A function in the various functions may be implemented in the form of a hardware structure, a software module, or a hardware structure and a software module.

In above embodiments according to the disclosure, the methods according to embodiments of the disclosure are introduced from the perspectives of the network-side device and the UE, respectively. In order to achieve various functions in the methods according to embodiments of the disclosure, the network-side device and the UE may implement various functions in the form of a hardware structure, a software module, or a hardware structure and a software module. A function in the various functions may be implemented in the form of a hardware structure, a software module, or a hardware structure and a software module.

Embodiments of the disclosure provide a communication apparatus. The communication apparatus may include a transceiving module and a processing module. The transceiving module may include a sending module and/or a receiving module. The sending module is configured to implement a sending function. The receiving module is configured to implement a receiving function. The transceiving module may implement both the sending function and/or the receiving function.

The communication apparatus may be a terminal device (e.g., the terminal device in the above method embodiment), or an apparatus in the terminal device, or an apparatus capable of matching the terminal device. Or, the communication apparatus may be a network device, or an apparatus in the network device, or an apparatus capable of matching the network device.

Embodiments of the disclosure provide another communication apparatus. The communication apparatus may be a network device; or a terminal device (e.g., the terminal device in the above method embodiment); or a chip, a chip system, or a processor, etc., that supports the network device to implement the above methods; or a chip, a chip system, or a processor, etc., that supports the terminal device to implement the above methods. The apparatus may be configured to implement the methods described in above method embodiments, and details may refer to the description in above method embodiments.

The communication apparatus may include one or more processors. The processor may be a general-purpose processor or a special-purpose processor, etc. For example, the processor may be a baseband processor or a central processor. The baseband processor may be configured to process a communication protocol and communication data. The central processor may be configured to control the communication apparatus (e.g., a network-side device, a baseband chip, a terminal device, a terminal device chip, DU or CU) to execute a computer program and process computer program data.

In some examples, the communication apparatus may also include one or more memories having a computer program stored thereon. The processor executes the computer program, so that the communication apparatus performs the methods described in above method embodiments. In some examples, data may also be stored in the memory. The communication apparatus and the memory may be arranged separately or integrated together.

In some examples, the communication apparatus may further include a transceiver and an antenna. The transceiver may be referred to as a transceiving unit, a transceiving machine, or a transceiving circuit, etc., which are configured to implement a transceiving function. The transceiver may include a receiver and a sender. The receiver may be referred to as a receiving machine or a receiving circuit, etc., which are configured to implement a receiving function. The sender may be referred to as a sending machine or a sending circuit, etc., which are configured to implement a sending function.

In some examples, the communication apparatus may include one or more interface circuits. The interface circuit is configured to receive a code instruction and transmit the code instruction to the processor. The processor is configured to run the code instruction, such that the communication apparatus performs the methods described in above method embodiments.

The communication apparatus is a terminal device (e.g., the terminal device in the above method embodiment): the processor is configured to perform any of the methods illustrated in FIGS. 1 to 4.

The communication apparatus is a network device: the transceiver is configured to perform any of the methods illustrated in FIGS. 5 to 7.

In one implementation, the processor may include a transceiver for implementing both a receiving function and a sending function. For example, the transceiver may be a transceiving circuit, or an interface, or an interface circuit. The transceiving circuit, the interface or the interface circuit which is configured to implement both the receiving function and the sending function may be arranged separately or integrated together. The transceiving circuit, the interface or the interface circuit may be configured to read and write codes/data, or may be configured to transmit or transfer a signal.

In one implementation, the processor may be configured to store a computer program therein, the computer program running on the processor to cause the communication apparatus to perform the methods described in above method embodiments. The computer program may be solidified in the processor, in which case the processor may be implemented by hardware.

In one implementation, the communication apparatus may include a circuit that can implement a sending or receiving or communicating function in above method embodiments. The processor and the transceiver described in the disclosure may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be fabricated using a variety of IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) or gallium arsenide (GaAs).

The communication apparatus described in above embodiments may be a network device or a terminal device (e.g., the terminal device in above method embodiments), but the scope of the communication apparatus described in the disclosure is not limited thereto. The structure of the communication apparatus may not be restricted. The communication apparatus may be a stand-alone device or part of a larger device. For example, the communication apparatus may be:
a stand-alone integrated circuit IC, or chip, a chip system or a subsystem;
a set with one or more ICs, and optionally, the IC set may also include a storage part for storing data and computer programs;
ASIC, such as a modem;
a module that may be embedded in other devices;
a receiver, a terminal device, an intelligent terminal device, a cellular phone, a wireless device, a handset, a mobile unit, a vehicular device, a network device, a cloud device, an artificial intelligence device, etc.; and
others.

In the case where the communication apparatus may be a chip or a chip system, the chip including a processor and an interface. The number of the processors may be one or more, and the number of interfaces may be multiple.

In some examples, the chip further includes a memory, the memory being configured to have stored necessary computer programs and data therein.

Those skilled in the art may also understand that various illustrative logical blocks and steps listed in embodiments of the disclosure may be implemented by electronic hardware, computer software, or a combination thereof. Such function being implemented in hardware or software depends on specific applications and design requirements of the entire system. Those skilled in the art may use various methods for each particular application to achieve the described functions, but such implementation should not be considered beyond the protection scope of embodiments of the application.

Embodiments of the disclosure further provide a system for determining a duration of a side link. The system includes a communication device as a terminal device (e.g., a first terminal device in the above method embodiment) and a communication apparatus as a network device in above embodiments; or the system includes a communication apparatus as a terminal device (e.g., the first terminal device in the above method embodiment) and a communication apparatus as a network device in above embodiments.

The disclosure further provides a readable storage medium configured to have stored an instruction therein, the instruction, when executed by a computer, being configured to implement the functions in any of above method embodiments.

The disclosure further provides a computer program product configured to be executed by a computer to implement the functions in any of the above methods.

In above embodiments, the functions may be entirely or partially implemented by software, hardware, firmware or any combination thereof. The functions may be entirely or partially implemented in the form of a computer program product while being implemented by software. The computer program product includes one or more computer programs. When the computer program is loaded and executed on a computer, a flow or function described in the embodiments of the disclosure is generated entirely or partially. The computer may be a general-purpose computer, a special-purpose computer, a computer network, or other programmable apparatus. The computer program may be stored in a computer-readable storage medium, or transmitted from one computer-readable storage medium to another computer-readable storage medium. For example, the computer program may be transmitted from a website site, a computer, a server or a data center to another website site, computer, server or data center by means of a wired (e.g., a coaxial cable, an optical fiber, or a digital subscriber line (DSL)) or wireless (e.g., infrared, wireless, or microwave) form. The computer-readable storage medium may be any available medium that can be accessed by the computer or a data storage device such as a server or a data center, which is integrated with one or more available media. The available medium may be a magnetic medium (e.g., a floppy disk, a hard disk or a magnetic tape), an optical medium (e.g., a high-density digital video disc (DVD)), or a semiconductor medium (e.g., a solid state disk (SSD)).

A person of ordinary skill in the art may understand that "first", "second" and other numerical symbols involved in the disclosure are distinguished only for the convenience of description, and are not used to limit the scope of the embodiments of the disclosure, and also indicate a sequential order.

At least one of the disclosure may also be described as one or more, and the plurality may be two, three, four, or more, without limitation in the disclosure. In the embodiments of the disclosure, for a technical feature, the technical features for this technical feature are distinguished by the terms "first", "second", "third", "A", "B", "C" and "D", etc., and the technical features described by "first", "second", "third", "A", "B", "C" and "D" are not in a chronological order or in a magnitude order.

Other embodiments of the disclosure will be apparent to those skilled in the art from consideration of the specification and to practice the disclosure herein. The disclosure is intended to cover any variations, uses, or adaptations of the disclosure, following the general principles thereof and including common knowledge or commonly used technical measures which are not disclosed herein. The specification and embodiments are to be considered as examples only, and the true scope and spirit of the disclosure are indicated by the following claims.

It will be appreciated that the disclosure is not limited to the exact construction that has been described above and illustrated in the accompanying drawings, and that various modifications and changes can be made without departing from the scope thereof. The scope of the disclosure is only limited by the appended claims.

## Claims

1. A model training and deploying method, performed by a user equipment (UE), comprising:
reporting capability information to a network device, the capability information being used for indicating support capabilities of the UE for an Artificial Intelligence (AI) and/or a Machine Learning (ML);
acquiring model information of an encoder model to be trained and/or model information of a decoder model to be trained, sent by the network device;
generating the encoder model and the decoder model based on the model information of the encoder model to be trained and/or the model information of the decoder model to be trained; and
sending the model information of the decoder model to the network device, the model information of the decoder model being used for deploying the decoder model.

2. The method of claim 1, wherein a model comprises at least one of:
an AI model; or
an ML model.

3. The method of claim 1 or 2, wherein the capability information comprises at least one of:
whether the UE supports the AI;
whether the UE supports the ML;
a type of an AI and/or ML model supported by the UE; or
maximum support capability information of the UE for a model, the maximum support capability information comprising structural information of a most complex model supported by the UE.

4. The method of claim 1 or 2, wherein generating the encoder model and the decoder model based on the model information of the encoder model to be trained and/or the model information of the decoder model to be trained comprises:
deploying the encoder model to be trained based on the model information of the encoder model to be trained, and/or deploying the decoder model to be trained based on the model information of the decoder model to be trained;
determining sample data based on measurement information and/or historical measurement information of the UE; and
training the encoder model to be trained and/or the decoder model to be trained based on the sample data to generate the encoder model and the decoder model.

5. The method of claim 1, wherein the model information of the decoder model comprises at least one of:
a model type of a model; or
model parameters of a model.

6. The method of claim 1, further comprising:
acquire indication information sent by the network device, the indication information being used for indicating an information type when the UE reports to the network device; the information type comprising at least one of original reported information that is not encoded by the encoder model or information obtained by encoding, with the encoder model, the original reported information; and
reporting to the network device based on the indication information.

7. The method of claim 6, wherein the reported information is information reported by the UE to the network device; the reported information comprises Channel State Information (CSI) information; and
wherein the CSI information comprises at least one of:
channel information;
feature matrix information of a channel;
feature vector information of the channel;
Precoding Matrix Indicator (PMI);
Channel Quality Indicator (CQI);
Rank Indicator (RI);
Reference Signal Received Power (RSRP);
Reference Signal Received Quality (RSRQ);
Signal-to-Interference plus Noise Ratio (SINR); or
reference signal resource indicator.

8. The method of claim 6, wherein the information type indicated by the indication information comprises the information obtained by encoding, with the encoder model, the original reported information; and
wherein reporting to the network device based on the indication information comprises:
encoding the reported information with the encoder model; and
reporting the encoded information to the network device.

9. The method of claim 1, further comprising:
updating the encoder model and the decoder model to generate an updated encoder model and an updated decoder model.

10. The method of claim 9, wherein updating the encoder model and the decoder model comprises:
acquiring update indication information sent by the network device, the update indication information being used for instructing the UE to adjust model parameters, or the update indication information comprising model information of a new encoder model and/or model information of a new decoder model, a type of the new encoder model and a type of the new decoder model being different from a type of an original encoder model and a type of an original decoder model;
determining the new encoder model and the new decoder model based on the update indication information; and
retraining the new encoder model and the new decoder model to obtain an updated encoder model and an updated decoder model.

11. The method of claim 9, wherein updating the encoder model and the decoder model comprises:
monitoring a distortion of an original encoder model and a distortion of an original decoder model; and
retraining the original encoder model and the original decoder model to obtain an updated encoder model and an updated decoder model in response to the distortions exceeding a first threshold, wherein the distortion of the updated encoder model and the distortion of the updated decoder model are both lower than a second threshold, and the second threshold is less than or equal to the first threshold.

12. The method of claim 10, wherein determining the new encoder model and the new decoder model based on the update indication information comprises:
obtaining, by the UE, the new encoder model and the new decoder model by adjusting model parameters of the original encoder model and the original decoder model in response to the update indication information being used for instructing the UE to adjust the model parameters; or
generating, by the UE, the new encoder model and the new decoder model based on the model information of the new encoder model and/or the model information of the new decoder model in response to the update indication information comprising the model information of the new encoder model and/or the model information of the new decoder model, the type of the new encoder model and the type of the new decoder model being different from the type of the original encoder model and the type of the original decoder model.

13. The method of claim 9, further comprising:
replacing the original encoder model directly with the updated encoder model.

14. The method of claim 9, further comprising:
determining differential model information between the model information of the updated encoder model and model information of an original encoder model; and
optimizing the original encoder model based on the differential model information.

15. The method of claim 9, further comprising:
sending the model information of the updated decoder model to the network device.

16. The method of claim 15, wherein the model information of the updated decoder model comprises:
all model information of the updated decoder model; or
differential model information between the model information of the updated decoder model and the model information of the original decoder model.

17. A model deploying method, performed by a network device, comprising:
acquiring capability information reported by a user equipment (UE), the capability information being used for indicating support capabilities of UE for an Artificial Intelligence (AI) and/or a Machine Learning (ML);
sending model information of an encoder model to be trained and/or model information of a decoder model to be trained to the UE based on the capability information;
acquiring model information of the decoder model sent by the UE, the model information of the decoder model being used for deploying the decoder model; and
generating the decoder model based on the model information of the decoder model.

18. The method of claim 17, wherein the model comprises at least one of:
an AI model; or
an ML model.

19. The method of claim 17 or 18, wherein the capability information comprises at least one of:
whether the UE supports the AI;
whether the UE supports the ML;
a type of the AI and/or the ML supported by the UE; or
maximum support capability information of the UE for a model, the maximum support capability information comprising structural information of a most complex model supported by the UE.

20. The method of claim 17, wherein sending the model information of the encoder model to be trained and/or the model information of the decoder model to be trained to the UE based on the capability information comprises:
selecting the encoder model to be trained and/or the decoder model to be trained based on the capability information, the encoder model to be trained being a model supported by the UE, and the decoder model to be trained being a model supported by the network device; and
sending the model information of the encoder model to be trained and/or the model information of the decoder model to be trained to the UE.

21. The method of claim 17, wherein the model information of the decoder model comprises at least one of:
a model type of a model; or
model parameters of a model.

22. The method of claim 17, further comprising:
sending indication information to the UE, the indication information being used for indicting an information type when the UE reports to the network device; and
wherein the information type comprises at least one of:
original reported information that is not encoded by the encoder model; or
information obtained by encoding, with the encoder model, the original reported information.

23. The method of claim 22, wherein the reported information is information to be reported by the UE to the network device; the reported information comprises Channel State Information (CSI) information; and
wherein the CSI information comprises at least one of:
channel information;
feature matrix information of a channel;
feature vector information of the channel;
Precoding Matrix Indicator (PMI);
Channel Quality Indicator (CQI);
Rank Indicator (RI);
Reference Signal Received Power (RSRP);
Reference Signal Received Quality (RSRQ);
Signal-to-Interference plus Noise Ratio (SINR); or
reference signal resource indicator.

24. The method of claim 22, wherein the information type indicated by the indication information comprises the information obtained by encoding, with the encoder model, the original reported information; and
wherein the method further comprises:
decoding information reported by the UE using the decoder model in response to receiving the information reported by the UE.

25. The method of claim 17, further comprising:
receiving model information of the updated decoder model sent by the UE; and
updating the model based on the model information of the updated decoder model.

26. The method of claim 25, further comprising:
sending update indication information to the UE,
wherein the update indication information is used for instructing the UE to adjust model parameters; or
the update indication information comprises model information of a new encoder model and/or model information of a new decoder model, and a type of the new encoder model and a type of the new decoder model are different from a type of an original encoder model and a type of an original decoder model.

27. The method of claim 25, wherein the model information of the updated decoder model comprises:
all model information of the updated decoder model; or
differential model information between the model information of the updated decoder model and the model information of the original decoder model.

28. The method of claim 25 or 27, wherein updating the model based on the model information of the updated decoder model comprises:
generating an updated decoder model based on the model information of the updated decoder model; and
replacing the original decoder model with the updated decoder model for model updating.

29. The method of claim 25 or 27, wherein updating the model based on the model information of the updated decoder model comprises:
optimizing an original decoder model based on the model information of the updated decoder model for model updating.

30. A model training and deploying apparatus, comprising:
a reporting module, configured to report capability information to a network device, the capability information being used for indicating support capabilities of a user equipment (UE) for an Artificial Intelligence (AI) and/or a Machine Learning (ML);
an acquiring module, configured to acquire model information of an encoder model to be trained and/or model information of a decoder model to be trained, sent by the network device;
a generating module, configured to generate the encoder model and the decoder model based on the model information of the encoder model to be trained and/or the model information of the decoder model to be trained; and
a sending module, configured to send the model information of the decoder model to the network device, the model information of the decoder model being used for deploying the decoder model.

31. A model training and deploying apparatus, comprising:
a first acquiring module, configured to acquire capability information reported by a user equipment (UE), the capability information being used for indicating support capabilities of the UE for an Artificial Intelligence (AI) and/or a Machine Learning (ML);
a sending module, configured to send model information of an encoder model to be trained and/or model information of a decoder model to be trained to the UE based on the capability information;
a second acquiring module, configured to acquire model information of the decoder model sent by the UE, the model information of the decoder model being used for deploying the decoder model; and
a generating module, configured to generate the decoder model based on the model information of the decoder model.

32. A communication apparatus, comprising a processor and a memory, wherein the memory has a computer program stored therein, and the processor is configured to execute the computer program stored in the memory, such that the apparatus performs the method of any one of claims 1 to 16.

33. A communication apparatus, comprising a processor and a memory, wherein the memory has a computer program stored therein, and the processor is configured to execute the computer program stored in the memory, such that the apparatus performs the method of any one of claims 17 to 29.

34. A communication apparatus, comprising a processor and an interface circuit,
wherein the interface circuit is configured to receive code instructions and transmit the code instructions to the processor; and
the processor is configured to run the code instructions to perform the method of any one of claims 1 to 16.

35. A communication apparatus, comprising a processor and an interface circuit,
wherein the interface circuit is configured to receive code instructions and transmit the code instructions to the processor; and
the processor is configured to run the code instructions to perform the method of any one of claims 17 to 29.

36. A computer-readable storage medium, having instructions stored thereon, wherein when the instructions are executed, the method of any one of claims 1 to 16 is performed.

37. A computer-readable storage medium, having an instruction stored thereon, when the instructions are executed, the method of any one of claims 17 to 29 is performed.
